(19) **Europäisches Patentamt European Patent Office Office européen des brevets**

(11) **EP 3 560 171 B1**

(12) **EUROPEAN PATENT SPECIFICATION**

(45) Date of publication and mention
of the grant of the patent:
**13.10.2021 Bulletin 2021/41**

(51) Int Cl.:
*H04L 29/06* (2006.01)     *B60W 40/09* (2012.01)
*H04L 29/08* (2006.01)     *G06F 16/22* (2019.01)
*H04W 4/02* (2018.01)      *B60W 50/00* (2006.01)

(21) Application number: **18826169.7**

(22) Date of filing: **26.12.2018**

(86) International application number:
**PCT/CN2018/123759**

(87) International publication number:
**WO 2019/165838 (06.09.2019 Gazette 2019/36)**

(54) **SYSTEMS AND METHODS FOR IDENTIFYING RISKY DRIVING BEHAVIOR**

SYSTEME UND VERFAHREN ZUR ERKENNUNG VON RISKANTEM FAHRVERHALTEN

SYSTÈMES ET PROCÉDÉS PERMETTANT D'IDENTIFIER UN COMPORTEMENT DE CONDUITE DANGEREUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.03.2018 CN 201810171875**
**25.06.2018 CN 201810664251**

(43) Date of publication of application:
**30.10.2019 Bulletin 2019/44**

(73) Proprietor: **Beijing Didi Infinity Technology and Development Co., Ltd.**
**Beijing 100193 (CN)**

(72) Inventors:
• **CHEN, Ao**
**Hangzhou, Zhejiang 310012 (CN)**
• **ZHANG, Hang**
**Hangzhou, Zhejiang 310012 (CN)**
• **WANG, Hengzhi**
**Hangzhou, Zhejiang 310012 (CN)**

(74) Representative: **Wang, Bo**
**Panovision IP**
**Ebersberger Straße 3**
**85570 Markt Schwaben (DE)**

(56) References cited:
CN-A- 102 800 136     CN-A- 103 818 327
CN-A- 108 791 303     JP-A- 2011 003 076
US-A1- 2007 173 994   US-A1- 2016 016 590

**Description**

**TECHNICAL FIELD**

The present disclosure generally relates to systems and methods for Online-to-Offline services, and in particular, to systems and methods for identifying risky driving behavior.

**BACKGROUND**

With the rapid development of road construction, the amount of vehicles becomes increasing large. The huge amount of vehicles may bring in frequent occurrence of traffic accidents and accordingly safe driving has become a significant problem. Drivers rarely realize that they have risky driving behaviors, resulting in great traffic safety risks. Further, with the development of Internet technology, Internet-based Online-to-Offline services (e.g., online taxi-hailing service) become increasingly popular. Accordingly, real-time detection of drivers' driving behaviors becomes necessary, which can ensure personal safeties of passengers and drivers.

In some situations, an online taxi-hailing platform can analyze the driving behaviors of the drivers based on driving data detected by sensors installed on smart devices (e.g., mobile phones) associated with online taxi-hailing services. However, accuracies and sensitivities of sensors of different mobile phones or different models of a same mobile phone may be quite different, which may result in that the driving behaviors of the drivers can not accurately identified. Therefore, it is desirable to provide systems and methods for identifying driving behaviors of drivers efficiently and accurately.

Document US 2016/0016590 method describes a method comprising the steps of: obtaining at least one motion data signal from sensors of a mobile device located in the vehicle; sending the at least one motion data signal from the sensors to a processing module; computing, in the processing module, an energy measurement of the at least one motion data signal; selecting time segments where the energy measurement of the at least one motion data signal exceeds a first threshold; analyzing the at least one motion data signal in said time segments; and assigning a driving event to each time segment.

**SUMMARY**

The invention relates to a system, as further defined in claim 1, a method, as further defined in claim 14, and a computer-readable medium, as further defined in claim 15, for identification of risky driving behavior of a driver.

**BRIEF DESCRIPTION OF THE DRAWINGS**

The present disclosure is further described in terms of exemplary embodiments. These exemplary embodiments are described in detail with reference to the drawings. These embodiments are non-limiting exemplary embodiments, in which like reference numerals represent similar structures throughout the several views of the drawings, and wherein:

FIG. 1 is a schematic diagram illustrating an exemplary on-demand service system according to some embodiments of the present disclosure;
FIG. 2 is a schematic diagram illustrating exemplary hardware and/or software components of an exemplary computing device according to some embodiments of the present disclosure;
FIG. 3 is a schematic diagram illustrating exemplary hardware and/or software components of an exemplary mobile device according to some embodiments of the present disclosure;
FIG. 4 is a block diagram illustrating an exemplary processing engine according to some embodiments of the present disclosure;
FIG. 5 is a block diagram illustrating an exemplary data processing module according to some embodiments of the present disclosure;
FIG. 6 is a flowchart illustrating an exemplary process for identifying a risky driving behavior according to some embodiments of the present disclosure;
FIG. 7 is a flowchart illustrating an exemplary process for obtaining second motion data according to some embodiments of the present disclosure;
FIG. 8 is a flowchart illustrating an exemplary process for detecting driving behaviors according to some embodiments of the present disclosure;
FIG. 9 is a schematic diagram illustrating an acceleration coordinate system according to some embodiments of the present disclosure;
FIG. 10 is a flowchart illustrating an exemplary process for determining a data interval within which a risky driving behavior may occur according to some embodiments of the present disclosure;

FIG. 11 is a schematic diagram illustrating a result in which a y-axis is rotated to be consistent with a driving direction of a vehicle according to some embodiments of the present disclosure;

FIG. 12 is a flowchart illustrating an exemplary process for performing a coordinate transformation on extracted acceleration data according to some embodiments of the present disclosure;

FIG. 13 is a schematic diagram illustrating a correspondence relationship between time and frequency in frequency domain feature according to some embodiments of the present disclosure;

FIG. 14 is a schematic diagram illustrating a correspondence relationship among time, frequency, and energy value in frequency domain feature according to some embodiments of the present disclosure;

FIG. 15-A is a schematic diagram illustrating a sudden deceleration of a vehicle according to some embodiments of the present disclosure;

FIG. 15-B is a schematic diagram illustrating a sudden turn of a vehicle according to some embodiments of the present disclosure;

FIG. 15-C is a schematic diagram illustrating a sudden acceleration of a vehicle according to some embodiments of the present disclosure;

FIG. 16 is a flowchart illustrating an exemplary process for detecting driving behaviors according to some embodiments of the present disclosure;

FIG. 17 is a block diagram illustrating an exemplary driving behavior detecting device executed on a mobile terminal according to some embodiments of the present disclosure;

FIG. 18 is a block diagram illustrating an exemplary processing engine according to some embodiments of the present disclosure; and

FIG. 19 is a flowchart illustrating an exemplary process for identifying a risky driving behavior according to some embodiments of the present disclosure.

## DETAILED DESCRIPTION

The following description is presented to enable any person skilled in the art to make and use the present disclosure and is provided in the context of a particular application and its requirements.

The terminology used herein is for the purpose of describing particular example embodiments only and is not intended to be limiting. As used herein, the singular forms "a," "an," and "the" may be intended to include the plural forms as well, unless the context clearly indicates otherwise. It will be further understood that the terms "comprise," "comprises," and/or "comprising," "include," "includes," and/or "including," when used in this disclosure, specify the presence of stated features, integers, steps, operations, elements, and/or components, but do not preclude the presence or addition of one or more other features, integers, steps, operations, elements, components, and/or groups thereof.

These and other features, and characteristics of the present disclosure, as well as the methods of operations and functions of the related elements of structure and the combination of parts and economies of manufacture, may become more apparent upon consideration of the following description with reference to the accompanying drawings, all of which form a part of this disclosure. It is to be expressly understood, however, that the drawings are for the purpose of illustration and description only and are not intended to limit the scope of the present disclosure. It is understood that the drawings are not to scale.

The flowcharts used in the present disclosure illustrate operations that systems implement according to some embodiments of the present disclosure. It is to be expressly understood, the operations of the flowcharts may be implemented not in order. Conversely, the operations may be implemented in inverted order, or simultaneously. Moreover, one or more other operations may be added to the flowcharts. One or more operations may be removed from the flowcharts.

Moreover, while the systems and methods disclosed in the present disclosure are described primarily regarding identifying driving behaviors associated with on-demand transportation services, it should also be understood that this is only one exemplary embodiment. The systems and methods of the present disclosure may be applied to any other kind of on-demand service. For example, the systems and methods of the present disclosure may be applied to transportation systems of different environments including land, ocean, aerospace, or the like, or any combination thereof. The vehicle of the transportation systems may include a taxi, a private car, a hitch, a bus, a train, a bullet train, a high-velocity rail, a subway, a vessel, an aircraft, a spaceship, a hot-air balloon, a driverless vehicle, or the like, or any combination thereof. The transportation system may also include any transportation system for management and/or distribution, for example, a system for sending and/or receiving an express. The application of the systems and methods of the present disclosure may include a webpage, a plug-in of a browser, a client terminal, a custom system, an internal analysis system, an artificial intelligence robot, or the like, or any combination thereof.

The terms "passenger," "requester," "requestor," "service requester," "service requestor," and "customer" in the present disclosure are used interchangeably to refer to an individual, an entity or a tool that may request or order a service. Also, the terms "driver," "provider," "service provider," and "supplier" in the present disclosure are used interchangeably to refer to an individual, an entity or a tool that may provide a service or facilitate the providing of the service. The term "user" in the present disclosure refers to an individual, an entity or a tool that may request a service, order a service, provide a service, or facilitate the providing of the service. In the present disclosure, terms "requester" and "requester terminal" may be used interchangeably, and terms "provider" and "provider terminal" may be used interchangeably.

The terms "request," "service," "service request," and "order" in the present disclosure are used interchangeably to refer to a request that may be initiated by a passenger, a requester, a service requester, a customer, a driver, a provider, a service provider, a supplier, or the like, or any combination thereof. The service request may be accepted by any one of a passenger, a requester, a service requester, a customer, a driver, a provider, a service provider, or a supplier. The service request may be chargeable or free.

The positioning technology used in the present disclosure may include a global positioning system (GPS), a global navigation satellite system (GLONASS), a compass navigation system (COMPASS), a Galileo positioning system, a quasi-zenith satellite system (QZSS), a wireless fidelity (WiFi) positioning technology, or the like, or any combination thereof. One or more of the above positioning technologies may be used interchangeably in the present disclosure.

An aspect of the present disclosure relates to systems and methods for identifying a risky driving behavior of a driver. The systems may obtain driving data from sensors associated with a vehicle driven by a driver. The sensors may be sensors installed on a mobile device associated with the vehicle. The systems may determine a target time period based on the driving data. The systems may also obtain target data within the target time period based on the driving data. The systems may further identify a presence of a risky driving behavior of the driver based on the target data. According to the systems and methods of the present disclosure, driving data can be obtained from the sensors installed on the mobile device and accordingly risky driving behaviors of drivers can be detected timely and effectively, thereby ensuring personal safeties of passengers and drivers. Furthermore, an allocation strategy for allocating service requests may be adjusted based on relevant data associated with the risky driving behaviors, thereby optimizing the online taxi-hailing platform.

Further, in order to obtain the target data within the target time period, the systems may filter out irrelevant data (e.g., data generated by a shaking of the mobile device) from the driving data based on a machine learning model, which can improve the accuracy of the identification of the risky driving behavior.

It should be noted that online on-demand service, such as online taxi-hailing services, is a new form of service rooted only in post-Internet era. It provides technical solutions to users and service providers that could raise only in post-Internet era. In the pre-Internet era, when a passenger hails a taxi on the street, the taxi request and acceptance occur only between the passenger and one taxi driver that sees the passenger. If the passenger hails a taxi through a telephone call, the service request and acceptance may occur only between the passenger and one service provider (e.g., one taxi company or agent). Online taxi, however, allows a user of the service to real-time and automatically distribute a service request to a vast number of individual service providers (e.g., taxi) distance away from the user. It also allows a plurality of service providers to respond to the service request simultaneously and in real-time. Therefore, through the Internet, the on-demand service system may provide a much more efficient transaction platform for the users and the service providers that may never meet in a traditional pre-Internet on-demand service system.

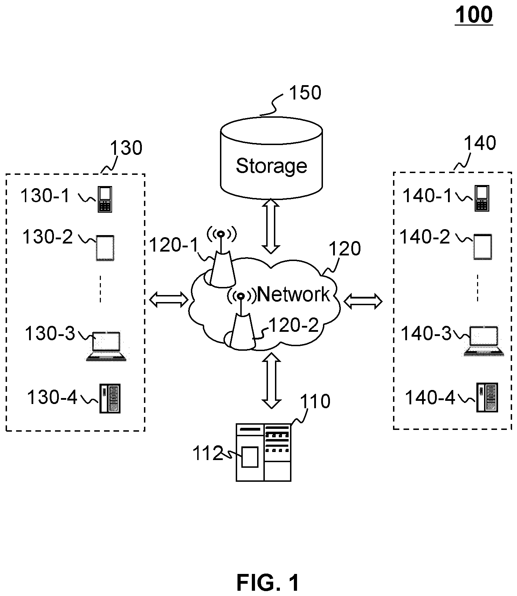

FIG. 1 is a schematic diagram illustrating an exemplary on-demand service system according to some embodiments of the present disclosure. In some embodiments, the on-demand service system 100 may be a system for Online-to-Offline services. For example, the on-demand service system 100 may be an online transportation service platform for transportation services such as taxi hailing, chauffeur services, delivery vehicles, carpool, bus service, driver hiring, shuttle services, etc. The on-demand service system 100 may be a platform including a server 110, a network 120, a requester terminal 130, a provider terminal 140, and a storage 150.

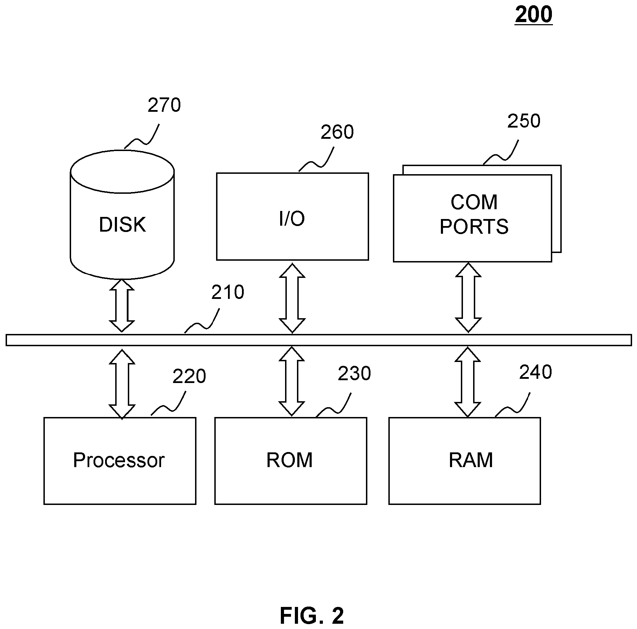

In some embodiments, the server 110 may be a single server or a server group. The server group may be centralized or distributed (e.g., server 110 may be a distributed system). In some embodiments, the server 110 may be local or remote. For example, the server 110 may access information and/or data stored in the requester terminal 130, the provider terminal 140, and/or the storage 150 via the network 120. As another example, the server 110 may be directly connected to the requester terminal 130, the provider terminal 140, and/or the storage 150 to access stored information and/or data. In some embodiments, the server 110 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof. In some embodiments, the server 110 may be implemented on a computing device 200 including one or more components illustrated in FIG. 2 in the present disclosure.

In some embodiments, the server 110 may include a processing engine 112. The processing engine 112 may process information and/or data relating to a service request to perform one or more functions of the server 110 described in the present disclosure. For example, the processing engine 112 may obtain driving data associated with a vehicle driven by a driver and identify a presence of a risky driving behavior of the driver based on the driving data. In some embodiments, the processing engine 112 may include one or more processing engines (e.g., single-core processing engine(s) or multi-core processor(s)). Merely by way of example, the processing engine 112 may include one or more hardware processors, such as a central processing unit (CPU), an application-specific integrated circuit (ASIC), an application-specific instruction-set processor (ASIP), a graphics processing unit (GPU), a physics processing unit (PPU), a digital signal processor (DSP), a field programmable gate array (FPGA), a programmable logic device (PLD), a controller, a microcontroller unit, a reduced instruction-set computer (RISC), a microprocessor, or the like, or any combination thereof. In some embodiments, the processing engine 112 may be integrated in the requester terminal 130 or the provider terminal 140.

The network 120 may facilitate exchange of information and/or data. In some embodiments, one or more components (e.g., the server 110, the requester terminal 130, the provider terminal 140, the storage 150) of the on-demand service system 100 may transmit information and/or data to other component(s) of the on-demand service system 100 via the network 120. For example, the server 110 may receive driving data from the provider terminal 140 via the network 120. In some embodiments, the network 120 may be any type of wired or wireless network, or combination thereof. Merely by way of example, the network 120 may include a cable network, a wireline network, an optical fiber network, a tele communications network, an intranet, an Internet, a local area network (LAN), a wide area network (WAN), a wireless local area network (WLAN), a metropolitan area network (MAN), a public telephone switched network (PSTN), a Bluetooth network, a ZigBee network, a near field communication (NFC) network, or the like, or any combination thereof. In some embodiments, the network 120 may include one or more network access points. For example, the network 120 may include wired or wireless network access points such as base stations and/or internet exchange points 120-1, 120-2, ... , through which one or more components of the on-demand service system 100 may be connected to the network 120 to exchange data and/or information.

In some embodiments, a service requester may be a user of the requester terminal 130. In some embodiments, the user of the requester terminal 130 may be someone other than the service requester. For example, a user A of the requester terminal 130 may use the requester terminal 130 to transmit a service request for a user B, or receive a service confirmation and/or information or instructions from the server 110. In some embodiments, a service provider may be a user of the provider terminal 140. In some embodiments, the user of the provider terminal 140 may be someone other than the service provider. For example, a user C of the provider terminal 140 may use the provider terminal 140 to receive a service request for a user D, and/or information or instructions from the server 110. In some embodiments, "service requester" and "requester terminal" may be used interchangeably, and "service provider" and "provider terminal" may be used interchangeably.

In some embodiments, the requester terminal 130 may include a mobile device 130-1, a tablet computer 130-2, a laptop computer 130-3, a built-in device in a motor vehicle 130-4, or the like, or any combination thereof. In some embodiments, the mobile device 130-1 may include a smart home device, a wearable device, a smart mobile device, a virtual reality device, an augmented reality device, or the like, or any combination thereof. In some embodiments, the smart home device may include a smart lighting device, a control device of an intelligent electrical apparatus, a smart monitoring device, a smart television, a smart video camera, an interphone, or the like, or any combination thereof. In some embodiments, the wearable device may include a smart bracelet, a smart footgear, a smart glass, a smart helmet, a smart watch, a smart clothing, a smart backpack, a smart accessory, or the like, or any combination thereof. In some embodiments, the smart mobile device may include a smartphone, a personal digital assistant (PDA), a gaming device, a navigation device, a point of sale (POS) device, or the like, or any combination thereof. In some embodiments, the virtual reality device and/or the augmented reality device may include a virtual reality helmet, a virtual reality glass, a virtual reality patch, an augmented reality helmet, an augmented reality glass, an augmented reality patch, or the like, or any combination thereof. For example, the virtual reality device and/or the augmented reality device may include a Google Glass™, a RiftCon™, a Fragments™, a Gear VR™, etc. In some embodiments, the built-in device in the motor vehicle 130-4 may include an onboard computer, an onboard television, etc. In some embodiments, the requester terminal 130 may be a device with positioning technology for locating the position of the requester and/or the requester terminal 130.

In some embodiments, the provider terminal 140 may be similar to, or the same device as the requester terminal 130. In some embodiments, the provider 140 may include one or more sensors. The one or more sensors may include a gyroscope, an acceleration sensor, a global positioning system (GPS), a gravity sensor, an optical sensor, a temperature sensor, a fingerprint sensor, a heart rate sensor, a proximity sensor, an acoustic detector, or the like, or any combination thereof. In some embodiments, the provider terminal 140 may be a device with positioning technology for locating the position of the provider and/or the provider terminal 140. In some embodiments, the provider terminal 140 may periodically transmit GPS data to the server 110. In some embodiments, the requester terminal 130 and/or the provider terminal 140 may communicate with another positioning device to determine the position of the requester, the requester terminal 130, the provider, and/or the provider terminal 140. In some embodiments, the requester terminal 130 and/or the provider terminal 140 may transmit positioning information to the server 110.

The storage 150 may store data and/or instructions. In some embodiments, the storage 150 may store data obtained from the requester terminal 130 and/or the provider terminal 140. In some embodiments, the storage 150 may store data and/or instructions that the server 110 may execute or use to perform exemplary methods described in the present disclosure. In some embodiments, the storage 150 may include a mass storage, a removable storage, a volatile read-and-write memory, a read-only memory (ROM), or the like, or any combination thereof. Exemplary mass storage may include a magnetic disk, an optical disk, a solid-state drive, etc. Exemplary removable storage may include a flash drive, a floppy disk, an optical disk, a memory card, a zip disk, a magnetic tape, etc. Exemplary volatile read-and-write memory may include a random access memory (RAM). Exemplary RAM may include a dynamic RAM (DRAM), a double date rate synchronous dynamic RAM (DDR SDRAM), a static RAM (SRAM), a thyristor RAM (T-RAM), and a zero-capacitor RAM (Z-RAM), etc. Exemplary ROM may include a mask ROM (MROM), a programmable ROM (PROM), an erasable programmable ROM (EPROM), an electrically erasable programmable ROM (EEPROM), a compact disk ROM (CD-ROM), and a digital versatile disk ROM, etc. In some embodiments, the storage 150 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof.

In some embodiments, the storage 150 may be connected to the network 120 to communicate with one or more components (e.g., the server 110, the requester terminal 130, the provider terminal 140) of the on-demand service system 100. One or more components of the on-demand service system 100 may access the data or instructions stored in the storage 150 via the network 120. In some embodiments, the storage 150 may be directly connected to or communicate with one or more components (e.g., the server 110, the requester terminal 130, the provider terminal 140) of the on-demand service system 100. In some embodiments, the storage 150 may be part of the server 110.

In some embodiments, one or more components (e.g., the server 110, the requester terminal 130, the provider terminal 140) of the on-demand service system 100 may access the storage 150. In some embodiments, one or more components of the on-demand service system 100 may read and/or modify information relating to the requester, the provider, and/or the public when one or more conditions are met. For example, the server 110 may read and/or modify one or more users' information after a service. As another example, the provider terminal 140 may access information relating to the requester when receiving a service request from the requester terminal 130, but the provider terminal 140 may not modify the relevant information of the requester.

In some embodiments, information exchanging of one or more components of the on-demand service system 100 may be achieved by way of requesting a service. The object of the service request may be any product. In some embodiments, the product may be a tangible product, or immaterial product. The tangible product may include food, medicine, commodity, chemical product, electrical appliance, clothing, car, housing, luxury, or the like, or any combination thereof. The immaterial product may include a servicing product, a financial product, a knowledge product, an internet product, or the like, or any combination thereof. The internet product may include an individual host product, a web product, a mobile internet product, a commercial host product, an embedded product, or the like, or any combination thereof. The mobile internet product may be used in a software of a mobile terminal, a program, a system, or the like, or any combination thereof. The mobile terminal may include a tablet computer, a laptop computer, a mobile phone, a personal digital assistant (PDA), a smart watch, a point of sale (POS) device, an onboard computer, an onboard television, a wearable device, or the like, or any combination thereof. For example, the product may be any software and/or application used on the computer or mobile phone. The software and/or application may relate to socializing, shopping, transporting, entertainment, learning, investment, or the like, or any combination thereof. In some embodiments, the software and/or application relating to transporting may include a traveling software and/or application, a vehicle scheduling software and/or application, a mapping software and/or application, etc. In the vehicle scheduling software and/or application, the vehicle may include a horse, a carriage, a rickshaw (e.g., a wheelbarrow, a bike, a tricycle), a car (e.g., a taxi, a bus, a private car), a train, a subway, a vessel, an aircraft (e.g., an airplane, a helicopter, a space shuttle, a rocket, a hot-air balloon), or the like, or any combination thereof.

In some embodiments, the on-demand service system 100 may be configured to identify driving behaviors of service providers (e.g., drivers). As used herein, the driver may be a private car owner and/or an online taxi-hailing driver, accordingly, the provider terminal 140 may be a user terminal of the private car owner or the online taxi-hailing driver. Furthermore, a driver client (also referred to as a "driver APP") may be installed on the provider terminal 140 and the provider terminal 140 moves with a vehicle (not shown) driven by the driver.

In some embodiments, the application scenario of the on-demand service system 100 may be an online taxi-hailing scenario or a private car scenario. For the online taxi-hailing scenario, the driver client may be an online taxi-hailing driver client and the server 110 may be a server corresponding to online taxi-hailing drivers. For the private car scenario, the driver client may be a private car owner client and the server 110 may be a server corresponding to private car owners.

In some embodiments, for the online taxi-hailing scenario, if the driver needs a driving behavior detection service, he/she can log in the online taxi-hailing driver client and activate a driving behavior detection function (also referred to as a "driving behavior identification function") via the online taxi-hailing driver client. After the driving behavior detection function is activated, it is possible to detect the driving behavior of the driver in real-time to determine whether the driver has a risky driving behavior. If it is determined that the driver has a risky driving behavior, then the driver will be reminded that he/she is currently in a risky driving status and has to adjust the driving behavior. In addition, the online taxi-hailing driver client may also upload data associated with the risky driving behavior to the server 110 to be stored. After obtaining the data associated with the risky driving behavior from the driver client, the server 110 may evaluate the driver based on the data associated with the risky driving behavior to determine a level of the driver. Meanwhile, server 110 may also adjust an allocation strategy for allocating service requests based on the data associated with the risky driving behavior.

In some embodiments, for the private car scenario, if the driver needs a driving behavior detection service, he/she can log in the private car owner client and activate a driving behavior detection function via the private car owner client. After the driving behavior detection function is activated, it is possible to detect the driving behavior of the driver in real-time to determine whether the driver has a risky driving behavior. If it is determined that the driver has a risky driving behavior, then the driver will be reminded that he/she is currently in a risky driving status and has to adjust the driving behavior. In addition, the private car owner client may also upload data associated with the risky driving behavior to the server 110 to be stored. After obtaining the data associated with the risky driving behavior from the driver client, the server 110 may perform a statistical operation based on the data associated with the risky driving behavior. For example, the server 110 may determine a number of times of risky driving behaviors of the driver per month (or per week), times when the risky driving behaviors occurred, road segments where the risky driving behaviors occurred, etc. After determining the above statistical data, the server 110 may push the statistical data to the private car owner client to remind the driver to adjust his or her driving behavior based on the statistical data. For example, if a number of times of risky driving behaviors of the driver on a specific road segment is relatively high, when the driver passes the road segment again, he/she can pay more attention and adjust his/her driving behavior, so as to further improve the driver's safety degree in the driving process.

One of ordinary skill in the art would understand that when an element of the on-demand service system 100 performs, the element may perform through electrical signals and/or electromagnetic signals. For example, when a requester terminal 130 processes a task, such as making a determination, identifying or selecting an object, the requester terminal 130 may operate logic circuits in its processor to process such task. When the requester terminal 130 sends out a service request to the server 110, a processor of the service requester terminal 130 may generate electrical signals encoding the service request. The processor of the requester terminal 130 may then send the electrical signals to an output port. If the requester terminal 130 communicates with the server 110 via a wired network, the output port may be physically connected to a cable, which may further transmit the electrical signals to an input port of the server 110. If the requester terminal 130 communicates with the server 110 via a wireless network, the output port of the requester terminal 130 may be one or more antennas, which may convert the electrical signals to electromagnetic signals. Similarly, a provider terminal 140 may process a task through operation of logic circuits in its processor, and receive an instruction and/or service request from the server 110 via electrical signals or electromagnet signals. Within an electronic device, such as the requester terminal 130, the provider terminal 140, and/or the server 110, when a processor thereof processes an instruction, sends out an instruction, and/or performs an action, the instruction and/or action is conducted via electrical signals. For example, when the processor retrieves or saves data from a storage medium (e.g., the storage 150), it may send out electrical signals to a read/write device of the storage medium, which may read or write structured data in the storage medium. The structured data may be transmitted to the processor in the form of electrical signals via a bus of the electronic device. Here, an electrical signal refers to one electrical signal, a series of electrical signals, and/or a plurality of distinguish electrical signals.

FIG. 2 is a schematic diagram illustrating exemplary hardware and software components of an exemplary computing device according to some embodiments of the present disclosure. In some embodiments, the server 110, the requester terminal 130, and/or the provider terminal 140 may be implemented on the computing device 200. For example, the processing engine 112 may be implemented on the computing device 200 and configured to perform functions of the processing engine 112 disclosed in this disclosure.

The computing device 200 may be used to implement any component of the on-demand service system 100 as described herein. For example, the processing engine 112 may be implemented on the computing device 200, via its hardware, software program, firmware, or a combination thereof. Although only one such computer is shown, for convenience, the computer functions relating to the on-demand service as described herein may be implemented in a distributed fashion on a number of similar platforms, to distribute the processing load.

The computing device 200, for example, may include COM ports 250 connected to and from a network connected thereto to facilitate data communications. The computing device 200 may also include a processor (e.g., the processor 220), in the form of one or more processors (e.g., logic circuits), for executing program instructions. For example, the processor may include interface circuits and processing circuits therein. The interface circuits may be configured to receive electronic signals from a bus 210, wherein the electronic signals encode structured data and/or instructions for the processing circuits to process. In some embodiments, the bus 210 may include an ISA bus, a PCI bus, an EISA bus, etc. In some embodiments, the bus 210 may include an address bus, a data bus, a control bus, etc. The processing circuits may conduct logic calculations, and then determine a conclusion, a result, and/or an instruction encoded as electronic signals. Then the interface circuits may send out the electronic signals from the processing circuits via the bus 210.

The computing device 200 may further include program storage and data storage of different forms including, for example, a disk 270, and a read only memory (ROM) 230, or a random access memory (RAM) 240, for storing various data files to be processed and/or transmitted by the computing device. The exemplary computing device may also include program instructions stored in the ROM 230, RAM 240, and/or other type of non-transitory storage medium to be executed by the processor 220. The methods and/or processes of the present disclosure may be implemented as the program instructions. The computing device 200 also includes an I/O component 260, supporting input/output between the computer and other components. The computing device 200 may also receive programming and data via network communications.

Merely for illustration, only one CPU and/or processor is illustrated in FIG 2. Multiple CPUs and/or processors are also contemplated; thus operations and/or method operations performed by one CPU and/or processor as described in the present disclosure may also be jointly or separately performed by the multiple CPUs and/or processors. For example, if in the present disclosure the CPU and/or processor of the computing device 200 executes both operation A and operation B, it should be understood that operation A and operation B may also be performed by two different CPUs and/or processors jointly or separately in the computing device 200 (e.g., the first processor executes operation A and the second processor executes operation B, or the first and second processors jointly execute operations A and B).

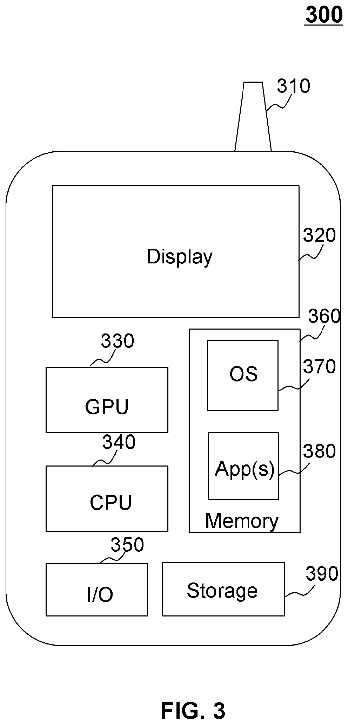

FIG. 3 is a schematic diagram illustrating exemplary hardware and/or software components of an exemplary mobile device according to some embodiments of the present disclosure. In some embodiments, the requester terminal 130 or the provider terminal 140 may be implemented on the computing device 300. As illustrated in FIG. 3, the mobile device 300 may include a communication platform 310, a display 320, a graphic processing unit (GPU) 330, a central processing unit (CPU) 340, an I/O 350, a memory 360, and a storage 390. In some embodiments, any other suitable component, including but not limited to a system bus or a controller (not shown), may also be included in the mobile device 300.

In some embodiments, a mobile operating system 370 (e.g., iOS™, Android™, Windows Phone™, etc.) and one or more applications 380 may be loaded into the memory 360 from the storage 390 in order to be executed by the CPU 340. The applications 380 may include a browser or any other suitable mobile apps for receiving and rendering information relating to on-demand services or other information from the on-demand service system 100. User interactions with the information stream may be achieved via the I/O 350 and provided to the processing engine 112 and/or other components of the on-demand service system 100 via the network 120.

To implement various modules, units, and their functionalities described in the present disclosure, computer hardware platforms may be used as the hardware platform(s) for one or more of the elements described herein. A computer with user interface elements may be used to implement a personal computer (PC) or any other type of work station or terminal device. A computer may also act as a server if appropriately programmed.

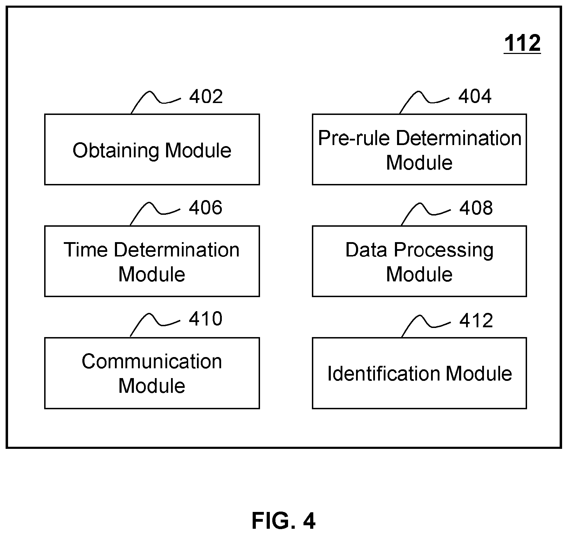

FIG. 4 is a block diagram illustrating an exemplary processing engine according to some embodiments of the present disclosure. The functions of the processing engine 112 disclosed in the present disclosure may be implemented by the server 110 via the processor 220, or by the requester terminal 130 and/or the provider terminal 140 via the processor 340. The processing engine 112 may include an obtaining module 402, a pre-rule determination module 404, a time determination module 406, a data processing module 408, a communication module 410, and an identification module 412.

The obtaining module 402 may obtain first motion data generated by a sensor associated with a device (e.g., a mobile terminal (e.g., the requester terminal 130, the provider terminal 140)). The sensor may include a gyroscope, an acceleration sensor, a global positioning system (GPS), a gravity sensor, an optical sensor, a temperature sensor, a fingerprint sensor, a heart rate sensor, a proximity sensor, an acoustic detector, or the like, or any combination thereof. The gyroscope may be an angular velocity sensor that measures a rotation angular velocity when the device is rotated or tilted. The acceleration sensor may be a capacitive acceleration sensor, an inductive acceleration sensor, a strained acceleration sensor, a piezoelectric resistance acceleration sensor, a piezoelectric acceleration sensor, or the like, or any combination thereof. The GPS may include a carrier including GPS which can communicate with the network 120. An in-vehicle GPS may determine motion data for positioning the vehicle and/or the device moving in the vehicle. The gravity sensor may include an elastic sensitive component which can produce a deformed induced electrical signal. In some embodiments, the gravity sensor may have the same function as the acceleration sensor. The first motion data may include information of electronic devices (e.g., a mobile smartphone on which an application has been installed, which is configured to implement methods/processes disclosed in the present disclosure or a vehicle carrying the mobile smartphone), such as a position, a velocity, an acceleration, a posture (e.g., character, yaw, angle, pitch motion, acceleration), or the like, or any combination thereof. In some embodiments, the device may be a mobile smartphone, a personal digital assistant (PDA), a tablet computer, a laptop computer, a computer (on-board computer), a handheld gaming platform (PSP), smart glasses, a smart watch, a wearable device, a virtual reality device and/or a display enhancement device (e.g., Google™ Glass, Oculus Rift, HoloLens, Gear VR, etc.) The mobile smartphone may include a touch screen, a speaker, a microphone, an antenna, or the like, or any combination thereof. The mobile smartphone may be connected to a mobile network and initiate a call. In some embodiments, the mobile smartphone may include at least one sensor. The at least one sensor may include a gyroscope, an acceleration sensor, a global positioning system (GPS), a gravity sensor, an optical sensor, a temperature sensor, a fingerprint sensor, a heart rate sensor, a proximity sensor, or the like, or any combination thereof.

In some embodiments, the sensor may generate the first motion data according to a first predetermined time interval (e.g., per 0.01 seconds, per 0.02 seconds, per 0.05 second, per second). The obtaining module 402 may obtain the first motion data according to a second predetermined time interval (e.g., per 0.01 seconds, per 0.02 seconds, per 0.05 second, per second). The first predetermined time interval and the second predetermined time interval may be default settings of the on-demand service system 100 or may be adjustable under different situations. The first predetermined time interval may be the same as or different from the second predetermined time interval.

In some embodiments, the first motion data may reflect a driving behavior of the driver or a vehicle state. In some embodiments, the driving behavior may be a risky driving behavior, such as a risky acceleration (e.g., a sudden acceleration), a risky brake (e.g., a sudden brake), a risky turn (e.g., a sudden turn), or the like, or any combination thereof. The risky acceleration may be caused by a continuous and/or severe stepping on the accelerator pedal by the driver. The risky brake may be caused by a continuous and/or severe stepping on the brake by the driver. The risky turn may be caused by a sudden turn of the steering wheel by the driver. The risky turn may include a sudden right turn, a sudden left-turn, and/or other sudden shifting direction behaviors. In some embodiments, the driver may implement driving behaviors through a remote control (e.g., using virtual manipulation at a remote location).

In some embodiments, the first motion data may include gyroscope data, acceleration sensor data, GPS data, gravity sensor data, optical sensor data, temperature sensor data, fingerprint sensor data, heart rate sensor data, proximity sensor data, angular acceleration data, or the like, or any combination thereof. Types of the first motion data may correspond to the sensors on the mobile smartphone. For example, an acceleration sensor in the mobile smartphone may generate or record acceleration data.

In some embodiments, motion data generated by different sensors may be combined or decomposed to describe a specified driving behavior. For example, acceleration sensor data, GPS data, and gravity sensor data may be combined to describe the sudden acceleration by the driver.

In some embodiments, the first motion data may correspond to a driving behavior, a vehicle state, and/or a road condition. For example, it is assumed that a sudden road traffic accident occurs in front of the vehicle, the driver may perform a sudden brake, and the acceleration sensor may produce a peak in its output signal and/or data during the sudden brake. In some embodiments, the first motion data may further include motion data associated with non-driving related behaviors (i.e., behaviors caused by actions other than driving related activities), such as motion data generated when a user of a mobile smartphone shakes the mobile smartphone during the driving. Therefore, the output signals and/or data from the sensors of the device may also include portions corresponding to the non-driving related behaviors. In some embodiments, the device may distinguish the motion data of the non-driving related behaviors. For example, it is assumed that the driver shakes the mobile smartphone for some reason, the mobile smartphone or an automotive application running in the mobile smartphone may distinguish a vibration from a driving behavior (e.g., a sudden turn) by analyzing features of the motion data.

In some embodiments, the obtaining module 402 may determine whether the device is moving with a vehicle based on the first motion data. In response to determining that the device which is being used by the driver is moving along a route or according to an order determined by an application and the order is associated with a vehicle, it may be determined that the device is moving with the vehicle. For example, when an application (e.g., a taxi-hailing APP) in the device provides route guidance for the device, and the application is associated with a vehicle that has been registered on the application, the obtaining module 402 may obtain a moving route of the device based on the obtained first motion data and determine whether it is the same as that provided by the application. If the two routes overlap with each other, the obtaining module 402 may determine that the device is moving with the vehicle.

The vehicle which is moving with the device may include a private car, a taxi, an internet car, an autonomous vehicle, an electric vehicle, a motorcycle, a bus, a train, a free ride, a bullet train, a high-velocity railway, a subway, a ship, an airplane, a spaceship, a hot air balloon, a driverless vehicle, or the like, or any combination thereof. In some embodiments, the device may move with the vehicle and detect the movement of the vehicle. For example, the driver of the vehicle may carry a mobile smartphone while driving and a device with at least one sensor (i.e., the mobile smartphone) may detect the movement of the vehicle. As another example, if a passenger uses a mobile smartphone in a taxi, the mobile smartphone may move with the taxi and record data associated with the taxi.

The pre-rule determination module 404 may determine a pre-rule. The pre-rule may include a fluctuation variance threshold (also referred to as a "variance threshold"). The fluctuation variance may be a variance of cumulative accelerations of the first motion data. For example, take a specific time point as an example, the fluctuation variance corresponding to the specific time point refers to a variance of a plurality of accelerations corresponding to a plurality of time points prior to the time point and the time point. The value of the fluctuation variance may indicate a fluctuation intensity of the acceleration. The pre-rule determination module 404 may determine a pre-rule admittance condition and/or a pre-rule exit condition. In some embodiments, the pre-rule admittance condition may be that the fluctuation variance of the first motion data is greater than a first threshold. In some embodiments, the pre-rule exit condition may be that the fluctuation variance of the first motion data is less than a second threshold. The first threshold and/or the second threshold may be default settings of the on-demand service system 100 or may be adjustable under different situations. The first threshold may be the same as or different from the second threshold. In some embodiments, when the pre-rule is admitted, the storage 150 may begin storing the first motion data. In some embodiments, when the pre-rule is admitted, the data processing module 408 may begin filtering out unneeded information (also referred to as "irrelevant information") from the first motion data. In some embodiments, the pre-rule may be stored in the storage 150 or obtained from a database and/or other sources by the communication module 410 via the network 120. In some embodiments, when the pre-rule is exited, the storage 150 may stop storing the first motion data. In some embodiments, when the pre-rule is exited, the data processing module 408 may stop filtering out unneeded information from the first motion data.

The time determination module 406 may determine a time period (also referred to as a "target time period") based on the pre-rule. In some embodiments, the time determination module 406 may determine a start time point of the time period based on a time point when the pre-rule is admitted, and determine an end time point of the time period based on a time point when the pre-rule is exited. The time determination module 406 may determine the time period based on the start time point and the end time point. In some embodiments, the time determination module 406 may also determine a time point associated with the time period. The time point may be the start time point of the time period, the end time point of the time period, or any time point within the time period. The time period and the time points may be transmitted to the server 110 by the communication module 410 together with second motion data.

The data processing module 408 may obtain second motion data (also referred to as "target data") within the time period based on the first motion data. In some embodiments, the data processing module 408 may filter out unneeded information from the first motion data. In some embodiments, the data processing module 408 may process the first motion data within the time period. In some embodiments, the data processing module 408 may execute part of functions of the obtaining module 402 to determine whether the device connected with one or more sensors is moving with the vehicle. In some embodiments, the data processing module 408 may further process the second motion data, such as associate the second motion data with the time period and/or time points associated therewith as associated information.

The communication module 410 may establish a communication connection among the server 110, the requester terminal 130, the provider terminal 140, the storage 150, and/or a database. In some embodiments, the communication module 410 may transmit the time period, the second motion data within the time period, and/or the time points (e.g., the start time point, the end time point) associated with the time period to the server 110. In some embodiments, the first motion data may be transmitted by the device (e.g., a mobile smartphone) or an in-vehicle wireless transmission device. In some embodiments, the communication module 410 may obtain a machine learning model from outside via the network 120.

In some embodiments, the communication module 410 may transmit the first motion data, the second motion data within the time period, and/or the time period to the server 110 according to a fixed sampling frequency or a varying sampling frequency.

The identification module 412 may identify whether the received second motion data are risky driving data based on the second motion data transmitted by the communication module 410 to the server 110. In some embodiments, the identification module 412 may identify the second motion data based on a machine learning approach. In some embodiments, the identification module 412 may identify the second motion data by using a deep learning GAN model. The risky driving data may correspond to a corresponding risky driving behavior. The risky driving behavior may include a sudden acceleration, a sudden brake, a sudden turn, or the like, or any combination thereof. In some embodiments, the risky driving data may include statistical data which correspond to scores or counts of risky driving behaviors. The statistical data may include a time of the sudden acceleration, a number count of sudden brakes, a time of the sudden turn, or the like, or any combination thereof.

The obtaining module 402, the pre-rule determination module 404, the time determination module 406, the data processing module 408, the communication module 410, and the identification module 412 in the processing engine 112 may be connected to each other or communicate with each other via a wired connection or a wireless connection. The wired connection may include a metal cable, an optical cable, a hybrid cable, or the like, or any combination thereof. The wireless connection may include a Local Area Network (LAN), a Wide Area Network (WAN), a Bluetooth, a ZigBee, a Near Field Communication (NFC), or the like, or any combination thereof. Two or more of the modules may be combined into a single module, and any one of the modules may be divided into two or more units.

It should be noted that the above description is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure. For example, the pre-rule determination module 404 and the time determination module 406 may be combined as a single module. As another example, the pre-rule determination module 404, the time determination module 406, and the data processing module 408 may be combined as a single module. The communication module 410 may be omitted.

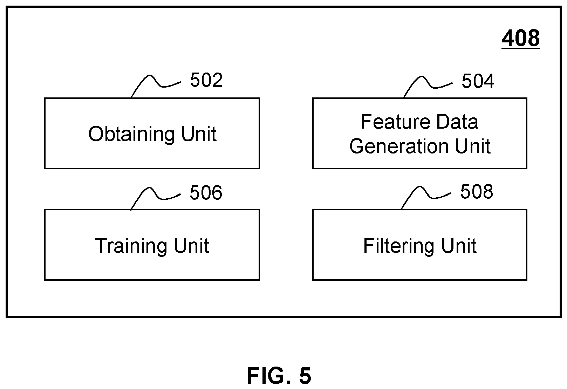

FIG. 5 is a block diagram illustrating an exemplary data processing module according to some embodiments of the present disclosure. The data processing module 408 may include an obtaining unit 502, a feature data generation unit 504, a training unit 506, and a filtering unit 508.

The obtaining unit 502 may obtain a time period, first motion data within the time period, and a machine learning model. In some embodiments, the obtaining unit 502 may obtain the time period and the first motion data within the time period through the communication module 410. In some embodiments, the obtaining unit 502 may obtain the machine learning model from the database through the communication module 410 via the network 120. In some embodiments, the obtaining unit 502 may obtain the machine learning model from the storage 150 through the communication module 410 via the network 120. In some embodiments, the obtaining unit 502 may generate the machine learning model. In some embodiments, the machine learning model may include a deep neural network, a deep belief network, a convolutional neural network, a convolution depth belief network, a deep Boltzmann machine, a stacked self-encoder, a deep stack network, a deep coding network, a deep nuclear machine, a two-class model, or the like, or any combination thereof.

The feature data generation unit 504 may generate feature data based on the first motion data obtained by the obtaining unit 502. The feature data may include a maximum acceleration, a minimum acceleration, an average acceleration, a maximum acceleration transformation angle, a minimum acceleration transformation angle, an average acceleration transformation angle, a maximum acceleration along each direction of a three-dimensional coordinate system, a minimum acceleration along each direction of the three-dimensional coordinate system, an average acceleration along each direction of the three-dimensional coordinate system, or the like, or any combination thereof. As used herein, for a specific acceleration as an example, an acceleration transformation angle refers to an angle between a direction of the specific acceleration in a first coordinate system and a direction of the specific acceleration in a second coordinate system. The acceleration may include a linear acceleration or an angular acceleration. In some embodiments, the feature data may be one or more values, one or more vectors, one or more determinants, one or more matrices, or the like, or any combination thereof.

The training unit 506 may train and update the machine learning model obtained by the obtaining unit 502 based on the feature data generated by the feature data generation unit 504. In some embodiments, the machine learning model may be a shaking binary model. In some embodiments, the machine learning model may filter out unneeded information from the first motion data. In some embodiments, the machine learning model may be updated online or offline. After the machine learning model is trained, the machine learning model may be further updated based on feature data obtained in real-time or according to a periodic time interval (e.g., daily or weekly). In some embodiments, the machine learning model may be further updated to generate sub-models that may correspond to different types of unneeded information. For example, a first sub-model may be used to classify unneeded information associated with the vehicle, and a second sub-model may be used to classify unneeded information associated with the mobile smartphone.

The filtering unit 508 may obtain second motion data by filtering out unneeded information from the first motion data based on the shaking binary model trained by the training unit 506. The unneeded information may include motion data generated by normal mobile phone shakings, motion data generated by normal driving behaviors, motion data generated by other unrisky driving behaviors, or the like, or any combination thereof. In some embodiments, the filtering unit 508 may distinguish motion data associated with non-driving related behaviors. For example, if the driver shakes the mobile smartphone for some reason, the filtering unit 508 may distinguish the shaking from the driving behaviors (e.g., a sudden turn) based on the machine learning model.

The units in the data processing module 408 may be connected to or communicate with each other via a wired connection or a wireless connection. The wired connection may include a metal cable, an optical cable, a hybrid cable, or the like, or any combination thereof. The wireless connection may include a Local Area Network (LAN), a Wide Area Network (WAN), a Bluetooth, a ZigBee, a Near Field Communication (NFC), or the like, or any combination thereof. It should be noted that the above description is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure. For example, the feature data generation unit 504 and the training unit 506 may be combined as a single module. As another example, the training unit 506 and the filtering unit 508 may be combined as a single module. The feature data generation unit 504 may be omitted.

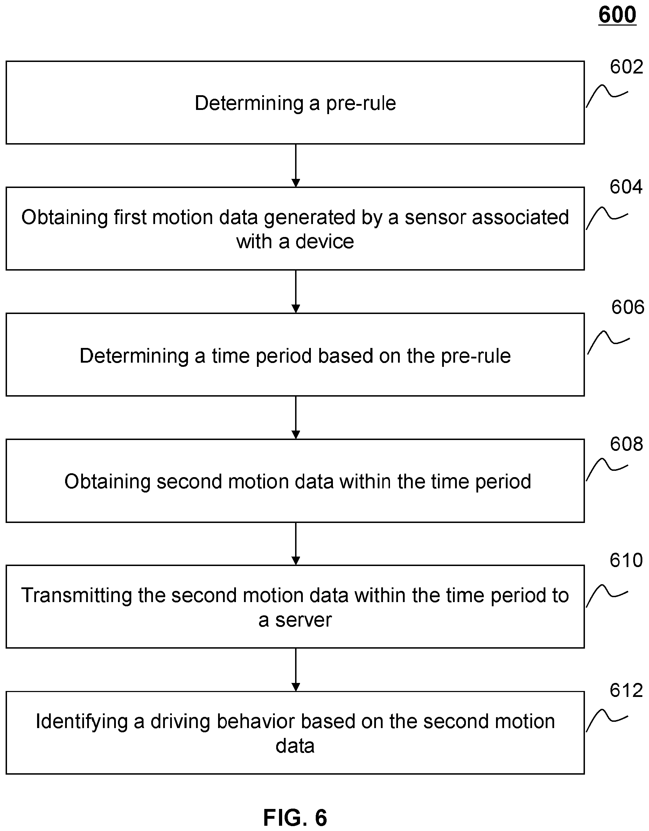

FIG. 6 is a flowchart illustrating an exemplary process for identifying a risky driving behavior according to some embodiments of the present disclosure. The process 600 may be executed by the on-demand service system 100. For example, the process 600 may be implemented as a set of instructions (e.g., an application) stored in the storage ROM 230 or RAM 240. The processor 220 and/or modules and/or units in FIGs. 4-5 may execute the set of instructions, and when executing the instructions, the processor 220, the modules, and/or the units may be configured to perform the process 600. The operations of the illustrated process presented below are intended to be illustrative. In some embodiments, the process 600 may be accomplished with one or more additional operations not described and/or without one or more of the operations discussed. Additionally, the order in which the operations of the process as illustrated in FIG. 6 and described below is not intended to be limiting. In some embodiments, the process 600 may be executed by the server 110 or a mobile terminal (e.g., the provider terminal 140). As describe elsewhere in the present disclosure, the processing engine 112 may be integrated in the server 110, the requester terminal 130, or the provider terminal 140, therefore, it can be considered that the process 600 is executed by the processing engine 112.

In 602, the pre-rule determination module 404 in the processing engine 112 may determine a pre-rule. The fluctuation variance may be a variance of cumulative accelerations of the first motion data. The value of the fluctuation variance may indicate a fluctuation intensity of the acceleration. The pre-rule determination module 404 may determine a pre-rule admittance condition and/or a pre-rule exit condition. In some embodiments, the pre-rule admittance condition may be that the fluctuation variance of the first motion data is greater than a first threshold. In some embodiments, the pre-rule exit condition may be that the fluctuation variance of the first motion data is less than a second threshold. The first threshold and/or the second threshold may be default settings of the on-demand service system 100 or may be adjustable under different situations. In some embodiments, when the pre-rule is admitted, the storage 150 may begin storing the first motion data. In some embodiments, when the pre-rule is admitted, the data processing module 408 may begin filtering out unneeded information (also referred to as "irrelevant information") from the first motion data. In some embodiments, the pre-rule may be stored in the storage 150 or obtained from a database and/or other sources by the communication module 410 via the network 120. In some embodiments, when the pre-rule is exited, the storage 150 may stop storing the first motion data. In some embodiments, when the pre-rule is exited, the data processing module 408 may stop filtering out unneeded information from the first motion data.

In some embodiments, the pre-rule may be generated by the pre-rule module 404. In some embodiments, the pre-rule may be stored in the storage 150 and obtained by the pre-rule module 404.

In 604, the obtaining module 402 in the processing engine 112 may obtain the first motion data generated by at least one sensor associated with the device. The first motion data may include information of electronic devices (e.g., a mobile smartphone on which an application has been installed, which is configured to implement methods/processes disclosed in the present disclosure or a vehicle carrying the mobile smartphone), such as a position, a velocity, an acceleration, a posture (e.g., character, yaw, angle, pitch motion, acceleration), or the like, or any combination thereof.

In some embodiments, the first motion data may reflect a driving behavior of the driver or a vehicle state. In some embodiments, the driving behavior may be a risky driving behavior, such as a risky acceleration (e.g., a sudden acceleration), a risky brake (e.g., a sudden brake), a risky turn (e.g., a sudden turn), or the like, or any combination thereof. In some embodiments, motion data generated by different sensors may be combined or decomposed to describe a specified driving behavior. For example, acceleration sensor data, GPS data, and gravity sensor data may be combined to describe the sudden acceleration by the driver.

In some embodiments, the first motion data may correspond to a driving behavior, a vehicle state, and/or a road condition. For example, it is assumed that a sudden road traffic accident occurs in front of the vehicle, the driver may perform a sudden brake, and the acceleration sensor may produce a peak in its output signal and/or data during the sudden brake. In some embodiments, the first motion data may further include motion data associated with non-driving related behaviors (i.e., behaviors caused by actions other than driving related activities), such as motion data generated when a user of a mobile smartphone shakes the mobile smartphone during the driving. Therefore, the output signals and/or data from the sensors of the device may also include portions corresponding to the non-driving related behaviors. The data related to non-driving related behaviors may be data associated with shaking which needs to be distinguished by a subsequent machine learning model.

In 606, the time determination module 406 in the processing engine 112 may determine a start time point of a time period based on a time point when the pre-rule is admitted, and determine an end time point of the time period based on a time point when the pre-rule is exited. The time determination module 406 may determine the time period based on the start time point and the end time point. In some embodiments, the time determination module 406 may also determine a time point associated with the time period. The time point may be the start time point of the time period, the end time point of the time period, or any time point within the time period. The time period and the time points may be transmitted to the server 110 by the communication module 410 together with second motion data. The time period may represent a time period within which a risky driving behavior may occur (i.e., the driver has a risky driving behavior). The obtaining module 402 in the processing engine 112 may obtain first motion data within the time period based on the time period.

In 608, the data processing module 408 in processing engine 112 may obtain second motion data within the time period based on the first motion data. The second motion data may include motion data with irrelevant data filtered out from the first motion data. In some embodiments, the second motion data may be obtained by performing a filtering on the first motion data based on a shaking binary machine learning model. In some embodiments, the second motion data may be one or more values, one or more vectors, one or more determinants, one or more matrices, or the like, or any combination thereof.

In 610, the communication module 410 in the processing engine 112 may transmit the second motion data within the time period to the server 110. In some embodiments, the communication module 410 may transmit the time period, the second motion data, and/or the time points associated with the time period to the server 110 via the network 120. In some embodiments, the communication module 410 may obtain a machine learning model via the network 120.

In 612, the identification module 412 in the processing engine 112 may identify a driving behavior corresponding to the second motion data transmitted by the communication module 410. In some embodiments, the identification module 412 may identify a risky driving behavior corresponding to the second motion data. In some embodiments, the identification module 412 may identify the risky driving behavior corresponding to the second motion data based on a machine learning model. In some embodiments, the machine learning model may be a deep learning GAN model, a deep neural network, a deep belief network, a convolutional neural network, a convolution depth belief network, a depth Boltzmann machine, a stacking self-encoder, a deep stacking Network, a deep coding network, a deep core machine, a binary model, or the like, or any combination thereof.

It should be noted that the above description is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure. For example, operation 602 may be performed after operation 604, or operation 602 and operation 604 may be performed simultaneously. As another example, at least one operation may be added or deleted in the process 600, for example, an operation for determining that a device associated with at least one sensor is moving with a vehicle may be added.

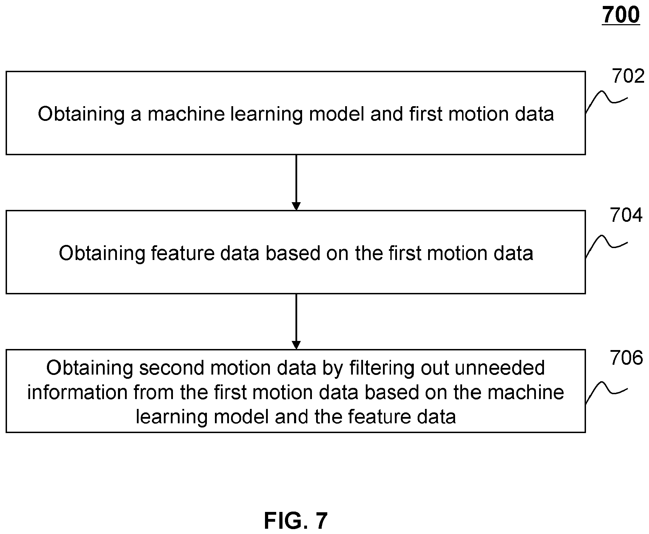

FIG. 7 is a flowchart illustrating an exemplary process for obtaining second motion data according to some embodiments of the present disclosure. The process 700 may be executed by the on-demand service system 100. For example, the process 700 may be implemented as a set of instructions (e.g., an application) stored in the storage ROM 230 or RAM 240. The processor 220 and/or modules and/or units in FIGs. 4-5 may execute the set of instructions, and when executing the instructions, the processor 220, the modules, and/or the units may be configured to perform the process 700. The operations of the illustrated process presented below are intended to be illustrative. In some embodiments, the process 700 may be accomplished with one or more additional operations not described and/or without one or more of the operations discussed. Additionally, the order in which the operations of the process as illustrated in FIG. 7 and described below is not intended to be limiting. In some embodiments, the process 700 may be executed by the server 110 or a mobile terminal (e.g., the provider terminal 140). As describe elsewhere in the present disclosure, the processing engine 112 may be integrated in the server 110, the requester terminal 130, or the provider terminal 140, therefore, it can be considered that the process 700 is executed by the processing engine 112.

In 702, the obtaining unit 502 in the data processing module 408 may obtain a time period, first motion data within the time period, and a machine learning model. In some embodiments, the obtaining unit 502 may obtain the time period and the first motion data within the time period through the communication module 410. In some embodiments, the obtaining unit 502 may obtain the machine learning model from the database through the communication module 410 via the network 120. In some embodiments, the obtaining unit 502 may obtain the machine learning model from the storage 150 through the communication module 410 via the network 120. In some embodiments, the obtaining unit 502 may generate the machine learning model. In some embodiments, the machine learning model may be a deep neural network, a deep belief network, a convolutional neural network, a convolution depth belief network, a depth Boltzmann machine, a stacking self-encoder, a deep stacking Network, a deep coding network, a deep core machine, a binary model, or the like, or any combination thereof.

In 704, the feature data generation unit 504 in the data processing module 408 may generate feature data based on the first motion data obtained by the obtaining unit 502. The feature data may include a maximum acceleration, a minimum acceleration, an average acceleration, a maximum acceleration transformation angle, a minimum acceleration transformation angle, an average acceleration transformation angle, a maximum acceleration along each direction of a three-dimensional coordinate system, a minimum acceleration along each direction of the three-dimensional coordinate system, an average acceleration along each direction of the three-dimensional coordinate system, or the like, or any combination thereof. The acceleration may include a linear acceleration or an angular acceleration. In some embodiments, the feature data may be one or more values, one or more vectors, one or more determinants, one or more matrices, or the like, or any combination thereof.

In 706, the training unit 506 in the data processing module 408 may train and update the machine learning model obtained by the obtaining unit 502 based on the feature data generated by the feature data generation unit 504. After the machine learning model is updated, irrelevant information may be filtered out from the first motion data based on the machine learning model. In some embodiments, the machine learning model may be a shaking binary model. In some embodiments, the machine learning model may be updated online or offline. After the machine learning training model is trained, the machine learning training model may be further updated based on feature data obtained in real-time or according to a periodic time interval (e.g., daily or weekly).

In some embodiments, the filtering unit 508 in the data processing module 408 may obtain second motion data by filtering out unneeded information from the first motion data based on the shaking binary model trained by the training unit 506. The unneeded information may include motion data generated by normal mobile phone shakings, motion data generated by normal driving behaviors, motion data generated by other unrisky driving behaviors, or the like, or any combination thereof. In some embodiments, the filtering unit 508 may distinguish motion data associated with non-driving related behaviors. For example, if the driver shakes the mobile smartphone for some reason, the filtering unit 508 may distinguish the shaking from the driving behaviors (e.g., a sudden turn) based on the machine learning model.

It should be noted that the above description is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure. For example, operation 706 may be divided into two operations including training a model and generating second motion data. As another example, at least one operation may be added or deleted in process 700, for example, an operation for distinguish different unneeded information of the first motion data may be added, such as the unneeded information generated by the normal driving behavior and the unneeded information generated by the shaking of the mobile phone.

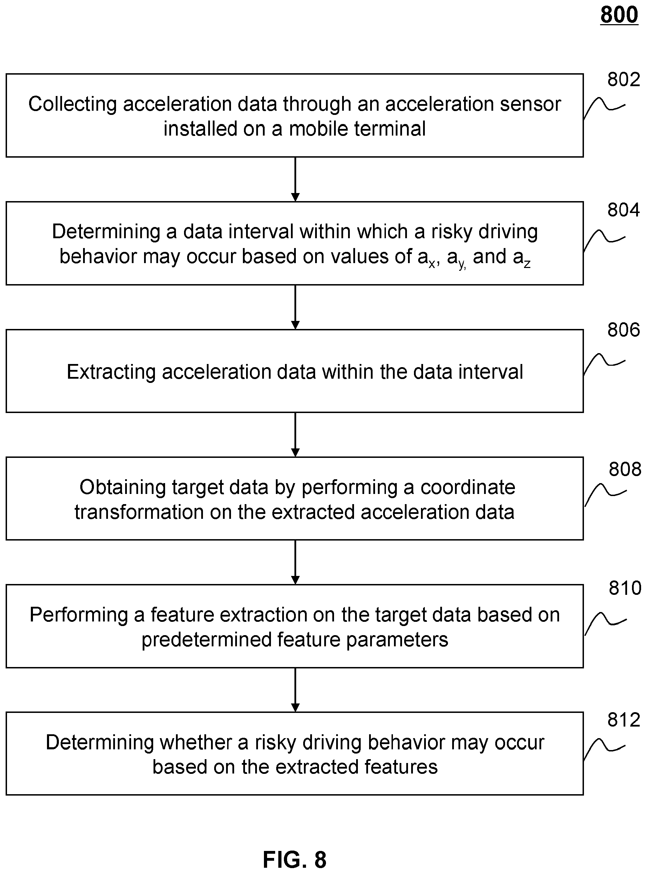

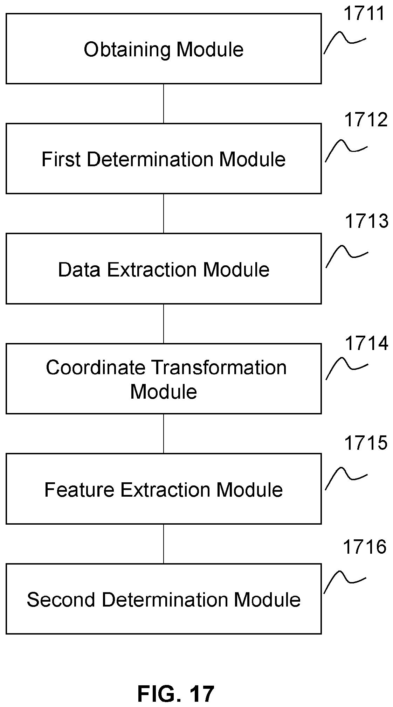

FIG. 8 is a flowchart illustrating an exemplary process for detecting driving behaviors according to some embodiments of the present disclosure. The process 800 may be executed by the on-demand service system 100. For example, the process 800 may be implemented as a set of instructions (e.g., an application) stored in the storage ROM 230 or RAM 240. The processor 220 and/or modules and/or units in FIG. 17 may execute the set of instructions, and when executing the instructions, the processor 220, the modules, and/or the units may be configured to perform the process 800. The operations of the illustrated process presented below are intended to be illustrative. In some embodiments, the process 800 may be accomplished with one or more additional operations not described and/or without one or more of the operations discussed. Additionally, the order in which the operations of the process as illustrated in FIG. 8 and described below is not intended to be limiting.

In some embodiments, the process 800 may be executed by a mobile terminal (e.g., the provider terminal 140) on which a driver client (e.g., an online taxi-hailing driver client) is installed. The mobile terminal may detect the driving behaviors of the driver to determine whether a risky driving behavior may occur. In some embodiments, the process 800 may be executed by the server 110. As describe elsewhere in the present disclosure, the processing engine 112 may be integrated in the server 110, the requester terminal 130, or the provider terminal 140, therefore, it can be considered that the process 800 is executed by the processing engine 112. Take the process 800 executed by a mobile terminal and executed in an online taxi-hailing application scenario as an example, the process may include the following operations.

In 802, acceleration data may be collected through an acceleration sensor installed on the mobile terminal, wherein the acceleration data may include acceleration data $a_x$, $a_y$ and $a_z$ corresponding to an x-axis, a y-axis, and a z-axis respectively (also referred to as "x-axis acceleration," "y-axis acceleration," and "z-axis acceleration" respectively).

Recently, smart mobile terminals generally include sensing devices such as an acceleration sensor, a gyroscope, etc. It can be determined whether the drive has a risky driving behavior by obtaining data collected by the above sensors and processing the data. Meanwhile, corresponding data may be transmitted to the server 110 through a wireless transmission function of the smart mobile terminal.

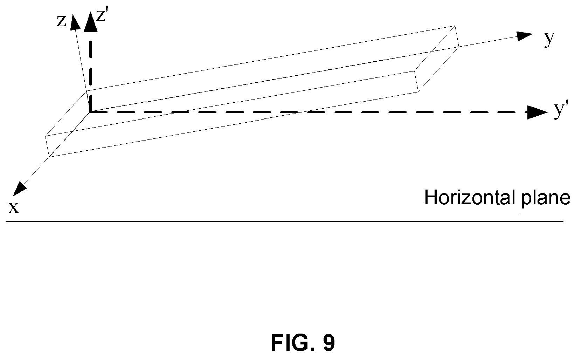

In some embodiments, data collected by the acceleration sensor may be mainly obtained, wherein the acceleration sensor may be a three-axis acceleration sensor. After the three-axis acceleration sensor collects acceleration data of the mobile terminal, acceleration data along three directions including x, y, and z may be obtained: $a_x$, $a_y$, and $a_z$. As illustrated in FIG. 9, when the mobile terminal is located along a plane which has a certain angle with the horizontal plane, a coordinate system formed by x, y, and z axes is shown in FIG. 9.

In 804, a data interval (also referred to as a "target time period") within which a risky driving behavior may occur may be determined based on values of $a_x$, $a_y$, and $a_z$. Since a risky driving behavior often occurs in a certain time period instead of the whole driving process, in some embodiments, after the acceleration data $a_x$, $a_y$, and $a_z$ are obtained, the data interval within which a risky driving behavior may occur may be determined based on the values of the acceleration data $a_x$, $a_y$, and $a_z$. After the data interval is determined, the following operation 806 may be performed.

In 806, acceleration data within the data interval may be extracted. In some embodiments, after the data interval within which a risky driving behavior may occur is determined, the acceleration data within the data interval may be extracted and the following operation 808 may be performed.

In 808, target data may be obtained by performing a coordinate transformation on the extracted acceleration data, wherein a plane composed of an x-axis and a y-axis corresponding to the target data may be a horizontal plane and a z-axis direction may be the same as a gravity direction. Since a posture of the mobile terminal may correspond to various situations, for example, as illustrated in FIG. 9, the mobile terminal has an angle with the horizontal plane. In this situation, it is necessary to perform a coordinate transformation on the acceleration data extracted in operation 806, wherein a result of the coordinate transformation is that the x-axis and the y-axis corresponding to the target data compose the horizontal plane and the z-axis direction is the same as the gravity direction. As illustrated in FIG. 9, the z-axis is rotated to z' and the y-axis is rotated to y'.

After the coordinate transformation is performed on the extracted acceleration data and the target data are obtained, operation 810 may be performed, in which a feature extraction may be performed on the target data according to predetermined feature parameters, wherein the predetermined feature parameters include at least one of a time domain feature, a frequency domain feature, and a velocity feature.

In 812, it may be determined whether a risky driving behavior may occur based on the extracted features.

It should be noted that, in some embodiments, the risky driving behavior may include but not limited to a sudden deceleration, a sudden turn, a sudden acceleration, a sudden brake, etc.

In some embodiments, according to the above process, the driving behaviors of the driver can be detected timely and effectively by the mobile terminal and whether the driver has a risky driving behavior can be determined. For the online taxi-hailing platform, the personal safeties of drivers and passengers can be ensured and service request allocation strategies can be optimized through the timely and effective detection of the risky driving behaviors of the drivers, and then the online taxi-hailing platform can be further optimized.

The method for detecting driving behaviors will be described below in connection with specific embodiments.

According to the above description, in some embodiments, the acceleration data of the mobile terminal may be detected by the three-axis acceleration sensor installed on the mobile terminal, wherein the acceleration data may include the acceleration data $a_x$, $a_y$, and $a_z$ corresponding to the three axes including x, y, and z respectively, for example, the acceleration data corresponding to the x, y, and z axes respectively illustrated in FIG. 9.

In some embodiments, since the three-axis acceleration sensor is installed on the mobile terminal and is in working condition all the time, that is, the three-axis acceleration sensor collects the acceleration data of the mobile terminal all the time. However, in some embodiments of the present disclosure, an obtaining mechanism of acceleration data may be set.

The obtaining mechanism of the acceleration data may be described as that when the mobile terminal activates the driving behavior detection function, the acceleration data detected by the acceleration sensor installed on the mobile terminal may be obtained.

That is to say, in some embodiments, when the mobile terminal activates the driving behavior detection function, the acceleration data of the mobile terminal detected by the acceleration sensor installed on the mobile terminal may be obtained. The conditions for determining whether to activate the driving behavior detection function include the following conditions:

Condition 1: if the mobile terminal activate a navigation function, the driving behavior detection function may be activated.

Specifically, if the driver client on the mobile terminal detects that the navigation function of the mobile terminal is activated, the driver client may activate the driving behavior detection function.

For example, a driver of a private car travels from A to B and before driving the car or during the driving of the car, the driver opens a navigation software on the mobile terminal and activates a navigation function of the navigation software. In this situation, after detecting that the navigation function of the navigation software is activated, the driver client on the mobile terminal may activate the driving behavior detection function. And after the detecting function is activated, the acceleration data collected by the acceleration sensor installed on the mobile terminal may be obtained.

After the acceleration data are obtained, a data interval within which a risky driving behavior may occur may be determined, acceleration data within the data interval may be extracted, target data may be obtained by performing a coordinate transformation on the extracted acceleration data, and after the target data are obtained, a feature extraction may be performed on the target data based on predetermined feature parameters and whether a risky driving behavior may occur may be determined based on extracted features.

If it is determined that a risky driving behavior occurs, relevant data associated with the risky driving behavior may be uploaded to the server 110 to be stored and/or to be analyzed, wherein the relevant data may include but not limited to acceleration data within the data interval, a time when the risky driving behavior occurs, a location (a road section) where the risky driving behavior occurs, a duration of the risky driving behavior, etc.

If the server 110 obtains a large amount of relevant data associated with risky driving behaviors of a plurality of drivers and obtains attribute information (e.g., gender, age, occupation, etc.) of the plurality of drivers, the server 110 may perform a big data analysis on the relevant data of the risky driving behaviors based on the attribute information. The analysis results may include but are not limited to a location (a road section) where risky driving behaviors may occur most frequently, a gender corresponding to the highest occurrence frequency of risky driving behaviors, an age corresponding to the highest occurrence frequency of risky driving behaviors, an occupation corresponding to the highest occurrence frequency of risky driving behaviors, etc.

It can be seen from the above description that according to the method provided in some embodiments, not only the risky driving behaviors of drivers can be detected timely and effectively, but a big data analysis also can be performed based on the detected risky driving behaviors. The analysis results may help people corresponding to the highest occurrence frequency of risky driving behaviors to realize and correct their risky driving behaviors in time. Meanwhile, the location (or road section) where risky driving behaviors may occur most frequently may provide an alarm for the relevant traffic department, and the road section may be accordingly rectified.

Condition 2: if the mobile terminal accepts a service request from the online taxi-hailing platform, the driving behavior detection function may be activated.

Specifically, if an online taxi-hailing driver client on the mobile terminal detects that an online taxi-hailing driver accepts a service request from the online taxi-hailing platform, the driving behavior detection function may be activated.

For example, when a specific online taxi-hailing driver accepts a service request via the online taxi-hailing driver client, the online taxi-hailing driver client may activate the driving behavior detection function. And after the detecting function is activated, acceleration data collected by the acceleration sensor installed on the mobile terminal may be obtained.

In this situation, the driver client on the mobile terminal and the online taxi-hailing driver client may be a same client. When the online taxi-hailing driver is not providing a service for a service request, the driving behavior detection function may not be activated. Once the driver client detects that the online taxi-hailing driver accepts a service request, the driving behavior detection function may be activated.

After the acceleration data are obtained, a data interval within which a risky driving behavior may occur may be determined, acceleration data within the data interval may be extracted, target data may be obtained by performing a coordinate transformation on the extracted acceleration data, and after the target data are obtained, a feature extraction may be performed on the target data based on predetermined feature parameters and whether a risky driving behavior may occur may be determined based on extracted features.

If it is determined that a risky driving behavior occurs, relevant data associated with the risky driving behavior may be uploaded to the server 110 to be stored and/or to be analyzed, wherein the relevant data may include but not limited to acceleration data within the data interval, a time when the risky driving behavior occurs, a location (a road section) where the risky driving behavior occurs, a duration of the risky driving behavior, etc.

In some embodiments, relevant data associated with risky driving behaviors may be sent to a designated server according to a preset period, for example, the stored acceleration data may be sent to the designated server according to the preset period. Or, if the stored relevant data associated with the risky driving behaviors reaches a preset amount, the stored relevant data associated with the risky driving behaviors may be sent to the designated server. For example, if the stored acceleration data reaches the preset amount, the stored acceleration data may be sent to the designated server.

After obtaining the relevant data associated with the risky driving behavior sent by the driver client, the server 110 (e.g., the processing engine 112 in the server 110) may evaluate the driver based on the relevant data to determine a level of the driver. Meantime, in some embodiments of the present disclosure, the server 110 may adjust an allocation strategy for allocating service requests based on the relevant data associated with the risky driving behavior.

For example, the server 110 may analyze the relevant data associated with the risky driving behavior and may determine that an occurrence frequency of risky driving behavior of a specific driver on a certain road segment is relatively high. At this time, the allocation strategy for allocating service requests may be adjusted to reduce an amount of service requests associated with the certain road segment to be allocated to the driver. Conversely, if an occurrence frequency of risky driving behavior of a specific driver on another road segment is very low (almost zero), then the allocation strategy for allocating service requests may be adjusted to increase an amount of service requests associated with the road segment to be allocated to the driver.

It can be seen from the description that according to method of the embodiments, not only the risky driving behaviors of the drivers can be detected timely and effectively, but the allocation strategy for allocating service requests also can be adjusted based on the detection result of the risky driving behaviors, thereby optimizing the online taxi-hailing platform.

Condition 3: if the mobile terminal activates the navigation function and accepts a service request from the online taxi-hailing platform, the driving behavior detection function may be activated.

Specifically, if the online taxi-hailing driver client on the mobile terminal detects that a navigation function of the mobile terminal is activated and detects that the online taxi-hailing driver accepts a service request from the online taxi-hailing platform, the driving behavior detection function may be activated.

For example, when a specific online taxi-hailing driver accepts a service request via the online taxi-hailing driver client, opens a navigation software on the mobile terminal before driving the vehicle or during driving the vehicle, and activates the navigation function of the navigation software, the online taxi-hailing driver client may activate the driving behavior detection function. And after the detecting function is activated, acceleration data collected by the acceleration sensor installed on the mobile terminal may be obtained.

After the acceleration data are obtained, the acceleration data may be processed as described in connection with condition 2 above which will not be repeated here.

In some embodiments, after determining that the driving behavior detection function is activated according to any one of the three conditions described above, the acceleration data $a_x$, $a_y$, and $a_z$ collected by the acceleration sensor installed on the mobile terminal may be obtained and the data interval within which a risky driving behavior may occur may be determined based on the values of $a_x$, $a_y$, and $a_z$.

It should be noted that the above description is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure.

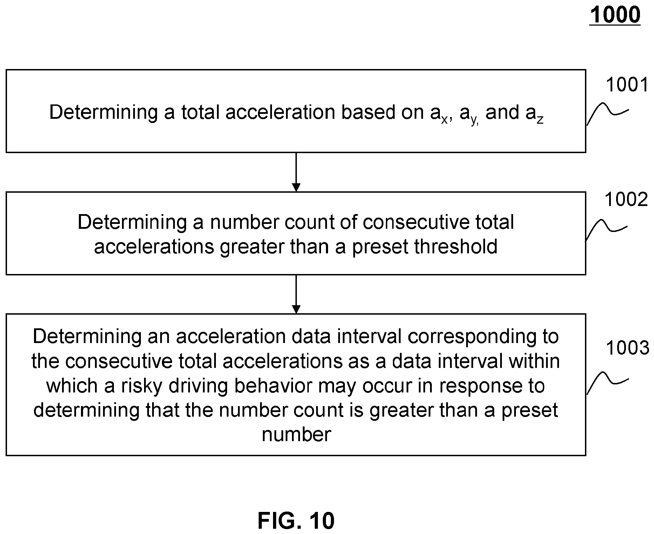

FIG. 10 is a flowchart illustrating an exemplary process for determining a data interval within which a risky driving behavior may occur according to some embodiments of the present disclosure. The process 1000 may be executed by the on-demand service system 100. For example, the process 1000 may be implemented as a set of instructions (e.g., an application) stored in the storage ROM 230 or RAM 240. The processor 220 and/or modules and/or units in FIG. 17 may execute the set of instructions, and when executing the instructions, the processor 220, the modules, and/or the units may be configured to perform the process 1000. The operations of the illustrated process presented below are intended to be illustrative. In some embodiments, the process 1000 may be accomplished with one or more additional operations not described and/or without one or more of the operations discussed. Additionally, the order in which the operations of the process as illustrated in FIG. 10 and described below is not intended to be limiting. In some embodiments, the process 1000 may be executed by the server 110 or a mobile terminal (e.g., the provider terminal 140). As describe elsewhere in the present disclosure, the processing engine 112 may be integrated in the server 110, the requester terminal 130, or the provider terminal 140, therefore, it can be considered that the process 1000 is executed by the processing engine 112.

In 1001, a total acceleration may be determined based on $a_x$, $a_y$, and $a_z$.

In some embodiments, the total acceleration may be determined based on $a_x$, $a_y$, and $a_z$ according to equation (1) below:

$$a = \sqrt{a_x + a_y + a_z} \qquad (1)$$

where a refers to the total acceleration.

In some embodiments, the total acceleration may be determined based on $a_x$, $a_y$, and $a_z$ according to equation (2) below:

$$a = a_x + a_y + a_z \qquad (2)$$

In 1002, a number count of consecutive total accelerations greater than a preset threshold (also referred to as an "acceleration threshold") may be determined.

In 1003, an acceleration data interval corresponding to the consecutive total accelerations may be determined as the data interval within which a risky driving behavior may occur in response to determining that the number count is greater than a preset number (also referred to as a "count threshold").

Specifically, in some embodiments, firstly, the acceleration data $a_x$, $a_y$, and $a_z$ may be collected by the acceleration sensor installed on the mobile terminal; secondly, the acceleration data $a_x$, $a_y$, and $a_z$ may be combined to determine the total acceleration, wherein the total acceleration may be determined according to equation (1) or equation (2). After the total acceleration is determined, the total acceleration may be monitored. Specifically, a value of the total acceleration may be counted to obtain a number count of consecutive total accelerations greater than the preset threshold. In response to determining that the number count is greater than the preset number, the acceleration data interval corresponding to the consecutive total accelerations may be determined as the data interval within which a risky driving behavior may occur.

It should be noted that, the preset threshold and the preset number may be selected firstly and a user may adjust the value of the preset threshold and the value of the preset number according to actual needs, which may not be specifically limited.

Generally, when the acceleration sensor collects the acceleration data, the collecting frequency may be fixed. Therefore, in some embodiments, the "preset number" can be converted to "time." It may be assumed that a number count of total accelerations obtained in a preset time period is the "preset number."

For example, after acceleration data are collected by the acceleration sensor, the total acceleration of the acceleration data may be determined according to equation (1) or equation (2). Whether a time of consecutive total accelerations greater than the preset threshold exceeds a preset time period may be determined. If the time exceeds the preset time period, the data interval corresponding to the total accelerations within the preset time period may be determined as the data interval within which a risky driving behavior may occur. Preferably, the preset time period may be selected to be 5 seconds. That is, if it is detected that the time of the consecutive total accelerations greater than the preset threshold exceeds 5 seconds, an acceleration data interval corresponding to the total accelerations within the 5 seconds may be determined as the data interval within which a risky driving behavior may occur.

After the data interval within which a risky driving behavior may occur is determined based on the operations described in 1001-1003, acceleration data within the data interval may be obtained. Then, a coordinate transformation may be performed on the extracted acceleration data to obtain the target data.

It can be seen from the above description that, since the mobile terminal is placed in the vehicle, when the total accelerations is greater than the preset threshold, it may indicate that the mobile terminal has a relatively large acceleration. Why a relatively large acceleration occurs may corresponds to the following two reasons: one may be a bumping of the vehicle or a shaking by a user; the other may be a sudden acceleration during a risky driving. In some embodiments, it is necessary to distinguish between the two reasons. In order to distinguish between the bumping of the vehicle and a risky driving behavior, the acceleration data extracted in 806 may be normalized to obtain normalized data (i.e., the target data), features may be extracted from the normalized data, and finally, whether a risky driving behavior may occur may be determined based on the extracted features.

In some embodiments, the purpose of normalizing the acceleration data extracted in 806 is to adjust the acceleration data to a condition under which the mobile terminal and the vehicle are in a same posture. Since the acceleration data collected by the acceleration sensor are data based on a local coordinate system of the mobile terminal, if the posture of the mobile terminal is different from that of the vehicle, even if a driving trajectory of the mobile terminal is totally the same as that of the vehicle, totally different data may be collected. Therefore, it is necessary to perform a normalization on the acceleration data to eliminate the influence of the mobile terminal posture.

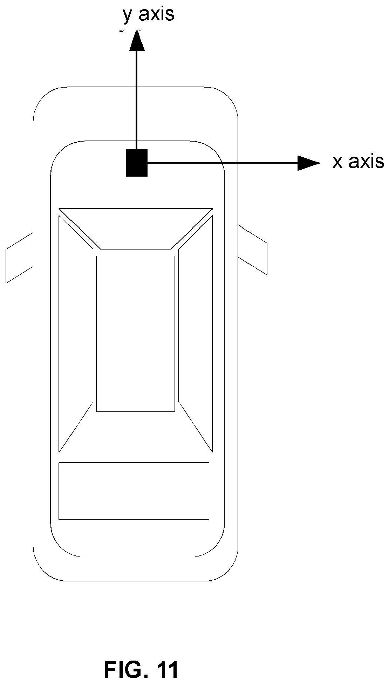

The normalization process above mainly includes two operations: firstly, a direction of z-axis of the three axes of the acceleration sensor may be rotated to a direction same as a gravity direction (e.g., z' illustrated in FIG. 9); secondly, a direction of x-axis or a direction of y-axis may be rotated to a direction same as a current driving direction, as illustrated in FIG. 11.

It should be noted that the above description is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure.

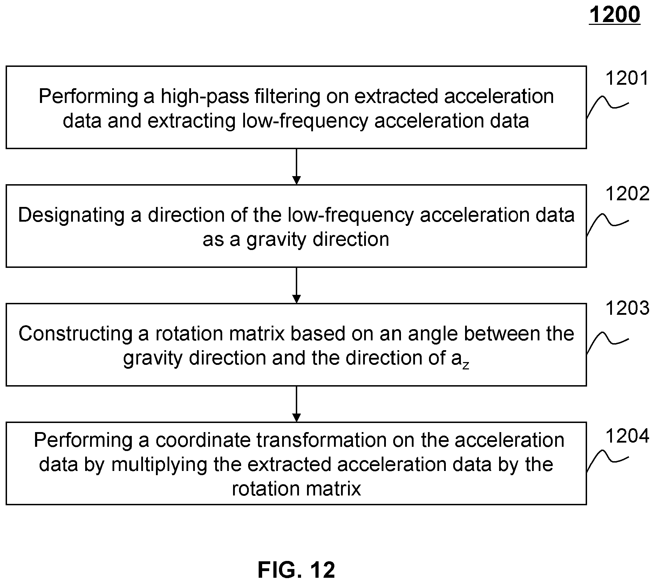

FIG. 12 is a flowchart illustrating an exemplary process for performing a coordinate transformation on extracted acceleration data according to some embodiments of the present disclosure. The process 1200 may be executed by the on-demand service system 100. For example, the process 1200 may be implemented as a set of instructions (e.g., an application) stored in the storage ROM 230 or RAM 240. The processor 220 and/or modules and/or units in FIG. 17 may execute the set of instructions, and when executing the instructions, the processor 220, the modules, and/or the units may be configured to perform the process 1200. The operations of the illustrated process presented below are intended to be illustrative. In some embodiments, the process 1200 may be accomplished with one or more additional operations not described and/or without one or more of the operations discussed. Additionally, the order in which the operations of the process as illustrated in FIG. 12 and described below is not intended to be limiting. In some embodiments, the process 1200 may be executed by the server 110 or a mobile terminal (e.g., the provider terminal 140). As describe elsewhere in the present disclosure, the processing engine 112 may be integrated in the server 110, the requester terminal 130, or the provider terminal 140, therefore, it can be considered that the process 1200 is executed by the processing engine 112.

In 1201, a high-pass filtering may be performed on the extracted acceleration data to extract low-frequency acceleration data. In some embodiments, a low-pass filtering may be performed on the acceleration to extract low-frequency acceleration data.

In 1202, a direction of the low-frequency acceleration data may be designated as a gravity direction.

In 1203, a rotation matrix may be constructed based on an angle between the gravity direction and a direction of $a_z$.

In 1204, the coordinate transformation may be performed on the acceleration data by multiplying the extracted acceleration data by the rotation matrix.

The acceleration data extracted in 806 as described above are acceleration data $a_x$, $a_y$, and $a_z$ corresponding to the three axes including x, y, and z within the data interval. In some embodiments, the high-pass filtering may be performed on the acceleration data extracted in 806 to extract the low-frequency acceleration data.

Since the direction of the gravitational acceleration g is constant, it may be considered as a low frequency signal. After the high-pass filtering is performed on the three components of the acceleration data extracted in 806, the gravity acceleration signal may be extracted, so that the direction of the low-frequency acceleration data can be designated as the gravity direction. After the gravity direction is determined, a rotation matrix may be constructed based on the angle between the gravity direction and the direction of $a_z$. Finally, the acceleration data may be multiplied by the rotation matrix and the coordinate transformation of the acceleration may be implemented, so that the z-axis and the gravity direction g are the same.

In some embodiments, the rotation matrix R may be expressed as below:

$$R = I + [v]_x + [v]_x^2 \frac{1-c}{s^2} \qquad (3)$$

where $v = g \times \frac{z}{9.8}$, $s = \|v\|$, $c = g \cdot \frac{z}{9.8}$, *g* refers to the gravity direction vector, *I* refers to a 3*3 unit matrix, *z* refers to a (0, 0, 1) vector, *v* refers to a cross product of a normalized vector of *g* and the vector *z*, *c* refers to a dot product of the normalized vector of *g* and the the vector *z*.
where

$$[v]_x \overset{\mathrm{def}}{=} \begin{bmatrix} 0 & -v_3 & v_2 \\ v_3 & 0 & -v_1 \\ -v_2 & v_1 & 0 \end{bmatrix} \qquad (4)$$

In some embodiments, the rotation matrix constructed based on equation (3) may be multiplied by the acceleration data extracted in 806 to perform the coordinate transformation on the acceleration data. According to the coordinate transformation, the direction of the z-axis and the gravity direction g may be the same (as shown in FIG. 9), and the x-axis and y-axis may be in the horizontal plane (as shown in FIG. 9).

In some embodiments, after the acceleration data extracted in 806 are multiplied by the rotation matrix, the coordinate axis corresponding to $a_x$ or $a_y$ may be adjusted to be consistent with the current driving direction according to a singular value decomposition (SVD) approach.

The SVD is an orthogonal matrix decomposition approach which is a reliable decomposition approach. The SVD may be expressed as below:

$$[U, S, V^*] = SVD(A) \qquad (5)$$

where *U* and *V** represent two mutually orthogonal matrices, *S* represents a diagonal matrix, and A represents the original matrix.

After the coordinate transformation is performed on the acceleration data according to the above approach, the x-axis and the y-axis are on the horizontal plane, but an angle between the driving direction of the vehicle and the x-axis and an angle between the driving direction and the y-axis may be uncertain. It is assumed that a relative position of the mobile terminal and the vehicle remains unchanged, that is, the mobile terminal is fixed on the vehicle. In some embodiments, according to the SVD approach, a coordinate axis corresponding to $a_x$ or $a_y$ after the coordinate transformation can be adjusted to the driving direction of the vehicle. For example, 300 points may be sampled within the data interval (e.g., the preset time period of 5 seconds) and a 300*3 matrix M may be obtained, and then a SVD decomposition may be performed on the matrix M. The decomposition of the matrix M may be expressed as below:

$$M = USV^* \qquad (6)$$

where M refers to the original matrix, and U and S refer to new normalized data, wherein the new normalized data may be data obtained by adjusting the coordinate axis corresponding to $a_x$ or $a_y$ to the current driving direction.

In some embodiments, after the target data are obtained according to the approach described in operations 1201~1204, and the coordinate axis corresponding to $a_x$ or $a_y$ is adjusted to be consistent with the current driving direction according to the singular value decomposition approach, a feature extraction may be performed on the target data based on predetermined feature parameters.

It can be seen from the above description that, in some embodiments, the feature parameters may include at least one of a time domain feature, a frequency domain feature, or a velocity feature. After the feature extraction is performed on the target data based on the feature parameters, the time domain feature, the frequency domain feature, and the velocity feature of the target data may be obtained. In some embodiments, whether the driver has a risky driving behavior may be determined based at least one of the time domain feature, the frequency domain feature, or the velocity feature of the target data.

For example, whether the driver has a risky driving behavior may be determined based on the time domain feature of the target data. As another example, whether the driver has a risky driving behavior may be determined based on the time domain feature and the frequency domain feature of the target data. As still another example, whether the driver has a risky driving behavior may be determined based on the time domain feature, the frequency domain feature, and the velocity feature of the target data.

(1) If the feature parameters include a time domain feature, the operation for performing the feature extraction on the target data based on the time domain feature may include determining a maximum acceleration along each coordinate axis, a minimum acceleration along each coordinate axis, an average acceleration along each coordinate axis, or an acceleration variance along each coordinate axis.

The time domain feature may include the following features: a maximum acceleration along each coordinate axis, a minimum acceleration along each coordinate axis, an average acceleration along each coordinate axis, or an acceleration variance along each coordinate axis. Therefore, in some embodiments, when the time domain feature of the target data is extracted, a maximum acceleration along each coordinate axis, a minimum acceleration along each coordinate axis, an average acceleration along each coordinate axis, or an acceleration variance along each coordinate axis may be extracted.

The maximum acceleration along each coordinate axis may be expressed as $Max(a_x)$, $Max(a_y)$, and $Max(a_z)$. The minimum acceleration along each coordinate axis may be expressed as $Min(a_x)$, $Min(a_y)$, and $Min(a_z)$. The average acceleration along each coordinate axis may be expressed as $mean(a_x)$, $mean(a_y)$, and $mean(a_z)$. The acceleration variance along each coordinate axis may be expressed as $var(a_x)$, $var(a_y)$, and $var(a_z)$.

(2) If the feature parameters include a frequency domain feature, the operation for performing the feature extraction on the target data based on the frequency domain feature may include converting the target data into frequency domain data based on a short time Fourier transform (STFT) and determining frequency domain feature corresponding to the frequency domain data.

The frequency domain feature may refer to a frequency domain signal obtained after the STFT is performed on the target data.

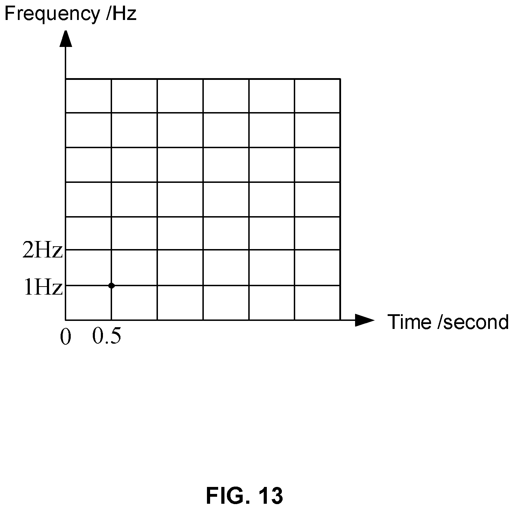

Regarding the frequency domain feature of the target data, a Fourier transform may be performed on the target data by using a STFT and a transformation result may be a two-dimensional matrix including a correspondence relationship between time and frequency illustrated in FIG. 13.

It should be noted that the above description is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure.

FIG. 13 is a schematic diagram illustrating a correspondence relationship between time and frequency according to some embodiments of the present disclosure.

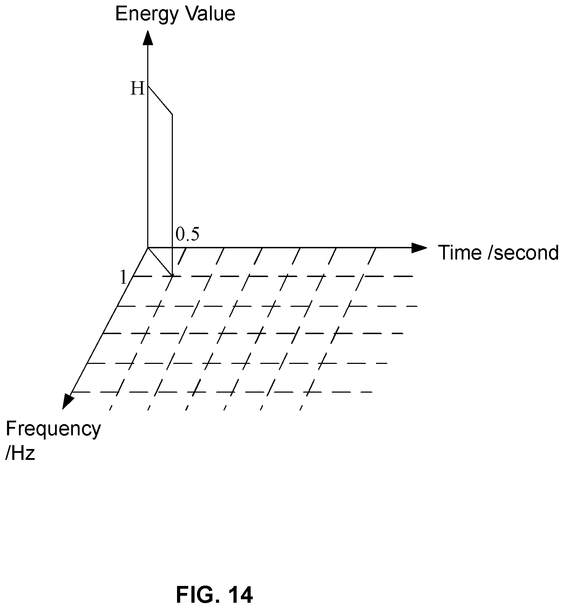

As illustrated in FIG. 13, each grid corresponds to a value indicating an energy value of a frequency at time t within a time range, and a correspondence relationship among energy value, time, and frequency may be illustrated in FIG. 14. As illustrated in FIG. 14, the energy value H represents an energy value in 0 to 1 Hz within 0 to 0.5 seconds. In some embodiments, it is considered that a frequency associated with a risky driving behavior is relatively low, and a frequency associated with a shaking or a normal bumping is relatively high. And a time period of a risky driving behavior may be relatively long, that is, a low-frequency duration may be relatively long. A time of a shaking or a normal bumping is generally short, so a high-frequency duration is not long. Therefore, whether the driver has a risky driving behavior may be determined by analyzing the frequency domain feature of the target data.

Optionally, the operation for determining the frequency domain feature corresponding to the frequency domain data may include determining a high-frequency energy value, a low-frequency energy value, or a low-frequency duration corresponding to the frequency domain data.

Specifically, when the frequency domain feature of the target data is used to determine whether the driver has a risky driving behavior, a ratio of the high-frequency energy value to the low-frequency energy value in the frequency domain feature and the low-frequency duration may be analyzed to determine whether the driver has a risky driving behavior. In some embodiments, optionally, a frequency less than 1 Hz may be specified as low frequency and a frequency greater than 2 Hz may be specified as high frequency. In addition, the low frequency and the high frequency may be defined in other ways.

The ratio of the high-frequency energy value to the low-frequency energy value in the frequency domain feature may be expressed as below:

$$\frac{max_t P(t, f < 1Hz)}{max_t P(t, f > 2Hz)} \qquad (7)$$

where $max_tP(t,f<1Hz)$ represents a maximum energy value when the frequency is less than 1 Hz, $max_tP(t, f>2Hz)$ represents a maximum energy value when the frequency is greater than 2 Hz (Hz), and $P(t, f)$ represents an energy density function determined based on the STFT.

By determining a ratio of the high-frequency energy value to the low-frequency energy value according to equation (7), it is possible to determine whether the primary energy is at high frequency or low frequency.

Next, the low-frequency duration may be determined. When determining the low-frequency duration, it is necessary to firstly determine a threshold as below:

$$thresh = max_tP(t, f < 1Hz) \qquad (8)$$

where the threshold represents a maximum energy value at low frequency. Then, the threshold may be multiplied by a coefficient $\alpha$ (e.g., a positive number less than 1) to determine the low-frequency duration.

Specifically, low-frequency duration may be expressed as:

$$T = \arg\max_t P(t, f < 1Hz) > \alpha thresh - \arg\min_t P(t, f < 1Hz) > \alpha thresh \qquad (9)$$

where $T$ represents a difference between a time point when the frequency firstly exceeds the threshold and a time point when the frequency lastly exceeds the threshold.

(3) If the feature parameters include a velocity feature, the operation for performing the feature extraction on the target data based on the velocity feature may include performing an integral on the target data along each coordinate axis and determining a maximum velocity along each coordinate axis, a minimum velocity along each coordinate axis, a velocity final-value along each coordinate axis, or a velocity mid-value along each coordinate axis based on the integral result.

In some embodiments, after the feature extraction is performed on the target data and the time domain feature, the frequency domain feature, and the velocity feature of the target data are obtained, whether the driver has a risky driving behavior may be determined based on at least one of the above three features.

In some embodiments, the operation for determining whether the driver has a risky driving behavior based on the extracted features may include inputting the extracted features to a decision tree model of the mobile terminal and outputting a decision result including whether a risky driving behavior may occur, wherein the decision tree model may be pre-trained based on feature parameters corresponding to risky driving behaviors.

In some embodiments, the trained decision tree model (e.g., xgboost) may be pre-stored in the driver client of the mobile terminal. When it is needed to use the decision tree model to analyze the risky driving behavior of the driver, the decision tree model may be invoked to analyze the risky driving behavior of the driver.

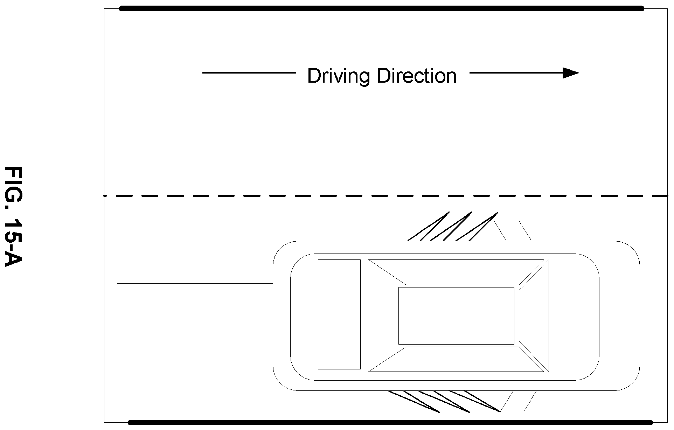

FIG. 15-A through FIG. 15-C are schematic diagrams illustrating risky driving behaviors according to some embodiments of the present disclosure.

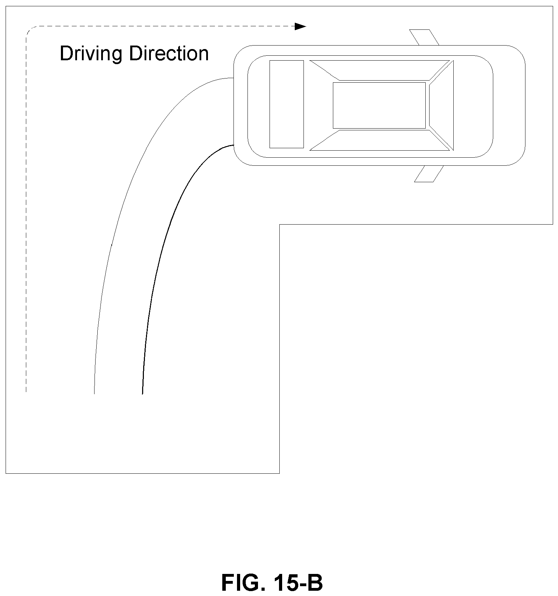

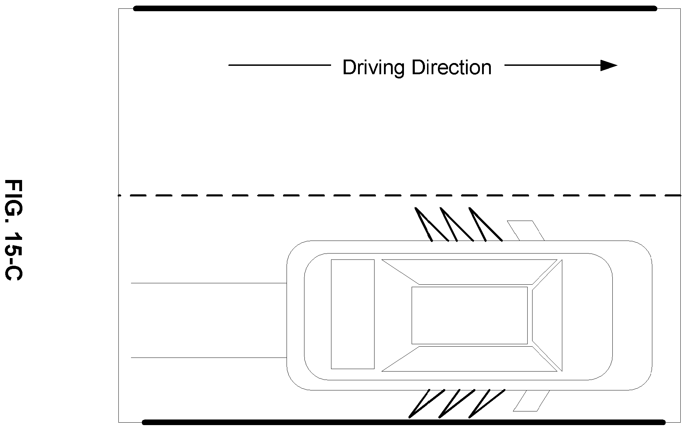

In some embodiments, the risky driving behavior may include but not limited to a sudden deceleration (shown in FIG. 15-A), a sudden turn (shown in FIG. 15-B), a sudden acceleration (shown in FIG. 15-C), a sudden brake, etc.

It is assumed that whether the driver has a risky driving behavior is determined based on the time domain feature, the frequency domain feature, and the velocity feature, a specific process is described as below:

The target data may be determined according to the method described in operations 802-810 and the time domain feature, the frequency domain feature, and the velocity feature may be extracted from the target data; then, the time domain feature, the frequency domain feature, and the velocity feature may be inputted into the trained decision tree model. The decision tree model may be configured to determine whether the driver has a risky driving behavior based on the time domain feature, frequency domain feature, and velocity feature and determine a type of the risky driving behavior in response to determining that the driver has a risky driving behavior.

It should be noted that, in this situation, the decision tree model may be a pre-trained model based on training samples. The training process may be described as follows: training samples may be obtained, wherein the training sample includes input data and output data, the input data may be a time domain feature, a frequency domain feature, and a velocity feature (i.e., the feature parameters described above), the output data may be identification information which indicates whether a behavior corresponding to the input data is a risky driving behavior and a type of the risky driving behavior. Further, the trained decision tree model may be obtained by training the model based on the training samples.

It can be seen from the description that according to the method of the embodiments, not only the risky driving behavior of the driver can be detected timely and effectively, but the allocation strategy for allocating service requests also can be adjusted based on the detection result of the risky driving behavior, thereby optimizing the online taxi-hailing platform.

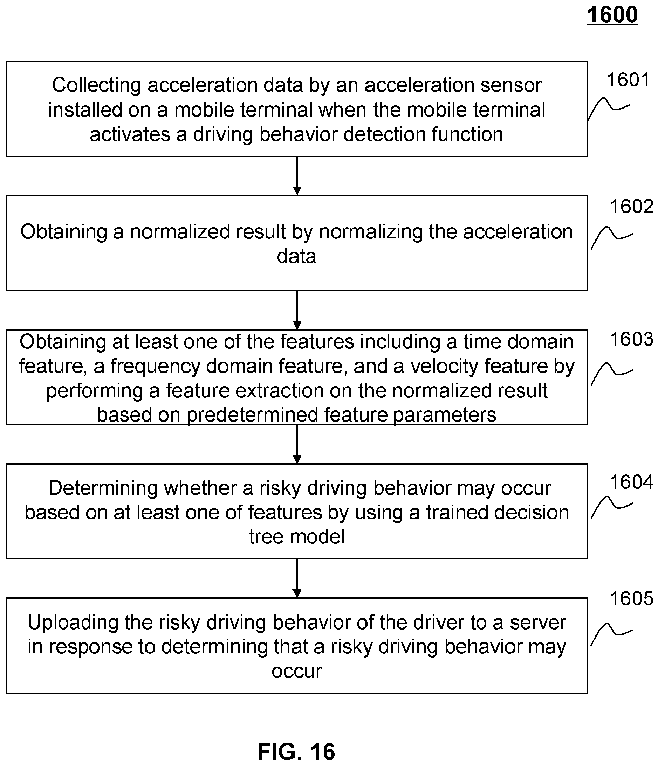

FIG. 16 is a flowchart illustrating an exemplary process for detecting driving behaviors according to some embodiments of the present disclosure. The process 1600 may be executed by the on-demand service system 100. For example, the process 1600 may be implemented as a set of instructions (e.g., an application) stored in the storage ROM 230 or RAM 240. The processor 220 and/or modules and/or unit in FIG. 17 may execute the set of instructions, and when executing the instructions, the processor 220, the modules, and/or the units may be configured to perform the process 1600. The operations of the illustrated process presented below are intended to be illustrative. In some embodiments, the process 1600 may be accomplished with one or more additional operations not described and/or without one or more of the operations discussed. Additionally, the order in which the operations of the process as illustrated in FIG. 16 and described below is not intended to be limiting.

The process 1600 may be executed by a mobile terminal on which a driver client is installed. The mobile terminal may detect the driving behaviors of the driver to determine whether a risky driving behavior may occur. In some embodiments, the process 1600 may be executed by the server 110. As describe elsewhere in the present disclosure, the processing engine 112 may be integrated in the server 110, the requester terminal 130, or the provider terminal 140, therefore, it can be considered that the process 1600 is executed by the processing engine 112. Take the process 1600 executed by a mobile terminal and executed in an online taxi-hailing application scenario as an example, the process may include the following operations.

In 1601, acceleration data may be collected by the acceleration sensor installed on the mobile terminal when the mobile terminal activates a driving behavior detection function.

If the mobile terminal activates the navigation function and/or accepts a service request from the online taxi-hailing platform, the driving behavior detection function may be activated. After the driving behavior detection function is activated, the acceleration data may be collected by the acceleration sensor installed on the mobile terminal.

In 1602, the acceleration data may be normalized to obtain a normalized processing result.

In some embodiments, before the acceleration data $a_x$, $a_y$, and $a_z$ are normalized, a data interval within which a risky driving behavior may occur may be determined based on values of the acceleration data $a_x$, $a_y$, and $a_z$ and acceleration data within the data interval may be extracted. Then the extracted acceleration data may be normalized, normalized data (i.e., the target data described above) may be obtained, and a feature extraction may be performed on the normalized data. Finally, whether a risky driving behavior may occur may be determined based on extracted features.

Specifically, the extracted acceleration data may be normalized according to the method described in operations 1201-1204 and details may not repeated here.

In 1603, a feature extraction may be performed on the normalized processing result based on predetermined feature parameters to obtain at least one of the following features: a time domain feature, a frequency domain feature, or a velocity feature.

In some embodiments, the features (the time domain feature, the frequency domain feature, and the velocity feature) may be extracted from the normalized processing result (the target data) according to the method described above and details may not repeated here.

In 1604, whether a risky driving behavior may occur may be determined based on at least one of the features above by using a trained decision tree model.

In some embodiments, whether a risky driving behavior may occur may be determined according to the method described above and details may not repeated here.

In 1605, the risky driving behavior of the driver may be uploaded to the server 110 in response to determining that a risky driving behavior may occur.

After it is determined that a risky driving behavior may occur, relevant data associated with the risky driving behavior of the driver may be uploaded to the server 110. After obtaining the relevant data associated with the risky driving behavior of the driver sent by the driver client, the server 110 may evaluate the driver based on the data and determine a level of the driver. Meanwhile, in some embodiments of the present disclosure, the server 110 may adjust an allocation strategy for allocating service requests based on the relevant data associated with the risky driving behavior.

For illustration purposes, the embodiment provides a specific application example in which a risky driving behavior may be detected by the online taxi hailing platform according to the detection method provided by the foregoing embodiment.

Scenario 1: the driver may be a private car owner, a mobile terminal of the private car owner may be placed in the vehicle, and the following process may be performed through the mobile terminal.

A private car owner may travel from location A to location B and activate a navigation software on the mobile terminal and activate the navigation function of the navigation software before driving the vehicle or during driving the vehicle.

At this time, after the driver client on the mobile terminal detects that the navigation function of the navigation software is activated, the driving behavior detection function may be activated. After the detecting function is activated, acceleration data collected by the acceleration sensor installed on the mobile terminal may be obtained.

After the acceleration data are obtained, a data interval within which a risky driving behavior may occur may be determined based on the acceleration data. For example, if a time of consecutive total accelerations greater than a preset threshold is greater than 5 seconds, a data interval corresponding to the total accelerations in the 5 seconds may be determined as the data interval within which a risky driving behavior may occur. The total acceleration may be an acceleration which is determined by performing a calculation on the acceleration data according to equation (1) or equation (2).

After the data interval within which a risky driving behavior may occur is determined, acceleration data within the data interval (e.g., 5 seconds) may be extracted, and a coordinate transformation may be performed on the extracted acceleration data to obtain the target data.

Successively, a feature extraction may be performed on the target data to extract at least one a time domain feature, a frequency domain feature, or a velocity feature.

Finally, whether the private car owner has a risky driving behavior may be determined based on the extracted feature parameters.

Scenario 2: the driver may be an online taxi-hailing driver, a mobile terminal of the online taxi-hailing driver may be placed in the vehicle, and the following process may be performed through the mobile terminal.

An online taxi-hailing driver may accept a service request via an online taxi-hailing driver client and activate the driving behavior detection function. And after the detecting function is activated, acceleration data collected by the acceleration sensor installed on the mobile terminal may be obtained.

After the acceleration data are obtained, a data interval within which a risky driving behavior may occur may be determined based on the acceleration data. For example, if a time of consecutive total accelerations greater than a preset threshold is greater than 5 seconds, a data interval corresponding to the total accelerations in the 5 seconds may be determined as the data interval within which a risky driving behavior may occur. The total acceleration may be an acceleration which is determined by performing a calculation on the acceleration data according to equation (1) or equation (2).

After the data interval within which a risky driving behavior may occur is determined, acceleration data within the data interval (e.g., 5 seconds) may be extracted, and a coordinate transformation may be performed on the extracted acceleration data to obtain the target data.

Successively, a feature extraction may be performed on the target data to extract at least one of a time domain feature, a frequency domain feature, or a velocity feature.

Finally, whether the online taxi-hailing driver has a risky driving behavior may be determined based on the extracted feature parameters.

Scenario 3: the driver may be an online taxi-hailing driver, a mobile terminal of the online taxi-hailing driver may be placed in the vehicle, and the following process may be performed through the mobile terminal.

An online taxi-hailing driver may accept a service request via an online taxi-hailing driver client and activate the driving behavior detection function. And after the detecting function is activated, acceleration data collected by the acceleration sensor installed on the mobile terminal may be obtained.

After the acceleration data are obtained, a data interval within which a risky driving behavior may occur may be determined based on the acceleration data. For example, if a time of consecutive total accelerations greater than a preset threshold is greater than 5 seconds, a data interval corresponding to the total accelerations in the 5 seconds may be determined as the data interval within which a risky driving behavior may occur. The total acceleration may be an acceleration which is determined by performing a calculation on the acceleration data according to equation (1) or equation (2).

After the data interval within which a risky driving behavior may occur is determined, acceleration data within the data interval (e.g., 5 seconds) may be extracted, and a coordinate transformation may be performed on the extracted acceleration data to obtain the target data.

Successively, a feature extraction may be performed on the target data to extract at least one of the following feature parameters: a time domain feature, a frequency domain feature, or a velocity feature.

Finally, whether the online taxi-hailing driver has a risky driving behavior may be determined based on the extracted feature parameters.

If it is determined that a risky driving behavior may occurs, relevant data associated with the risky driving behavior may be uploaded to the server 110 to be stored and/or to be analyzed, wherein the relevant data may include but not limited to acceleration data within the data interval, a time when the risky driving behavior occurs, a location (a road section) where the risky driving behavior occurs, a duration of the risky driving behavior, etc.

After obtaining the relevant data associated with the risky driving behavior sent by the driver client, the server 110 (e.g., the processing engine 112 in the server 110) may evaluate the driver based on the relevant data to determine a level of the driver. Meantime, in some embodiments of the present disclosure, the server 110 may adjust an allocation strategy for allocating service requests based on the relevant data associated with the risky driving behavior.

Scenario 4: the driver may be a private car owner or an online taxi-hailing driver, the mobile terminal of the private car owner or the online taxi-hailing driver may be placed in the vehicle, and the following process may be performed through the mobile terminal.

A private car owner may travel from location A to location B and activate a navigation software on the mobile terminal and activate the navigation function of the navigation software before driving the vehicle or during driving the vehicle. At this time, after the driver client on the mobile terminal detects that the navigation function of the navigation software is activated, the driving behavior detection function may be activated. After the detecting function is activated, acceleration data collected by the acceleration sensor installed on the mobile terminal may be obtained.

Alternatively, an online taxi-hailing driver may accept a service request via an online taxi-hailing driver client and activate the driving behavior detection function. And after the detecting function is activated, acceleration data collected by the acceleration sensor installed on the mobile terminal may be obtained.

After the acceleration data are obtained, a data interval within which a risky driving behavior may occur may be determined based on the acceleration data. For example, if a time of consecutive total accelerations greater than a preset threshold is greater than 5 seconds, a data interval corresponding to the total accelerations in the 5 seconds may be determined as the data interval within which a risky driving behavior may occur. The total acceleration may be an acceleration which is determined by performing a calculation on the acceleration data according to equation (1) or equation (2).

After the data interval within which a risky driving behavior may occur is determined, acceleration data within the data interval (e.g., 5 seconds) may be extracted, and a coordinate transformation may be performed on the extracted acceleration data to obtain the target data.

Successively, a feature extraction may be performed on the target data to extract at least one of a time domain feature, a frequency domain feature, or a velocity feature.

Finally, the time domain feature, frequency domain feature, and velocity feature may be inputted into the trained decision tree model. The decision tree model may be configured to determine whether the driver has a risky driving behavior based on the time domain feature, frequency domain feature, and velocity feature and determine a type of the risky driving behavior in response to determining that the driver has a risky driving behavior.

It should be noted that, in this situation, the decision tree model may be a pre-trained model based on training samples. The training process may be described as follows: training samples may be obtained, wherein the training sample includes input data and output data, the input data may be a time domain feature, a frequency domain feature, and a velocity feature (i.e., the feature parameters described above), the output data may be identification information which indicates whether a behavior corresponding to the input data is a risky driving behavior and a type of the risky driving behavior. Further, the trained decision tree model may be obtained by training the model based on the training samples.

It should be noted that the above description is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure.

FIG. 17 is a block diagram illustrating an exemplary driving behavior detecting device executed on a mobile terminal according to some embodiments of the present disclosure. The driving behavior detecting device 1700 may include an obtaining module 1711, a first determination module 1712, a data extraction module 1713, a coordinate transformation module 1714, a feature extraction module 1715, and a second determination module 1716. In some embodiments, the driving behavior detecting device 1700 may be integrated into the server 110. For example, the driving behavior detecting device 1700 may be part of the processing engine 112.

The obtaining module 1711 may be configured to obtain acceleration data through an acceleration sensor installed on the mobile terminal. The acceleration data may include acceleration data $a_x$, $a_y$, and $a_z$ corresponding to an x-axis, a y-axis, and a z-axis respectively (also referred to as "x-axis acceleration," "y-axis acceleration," and "z-axis acceleration" respectively).

The first determination module 1712 may be configured to determine a data interval (also referred to as a "target time period") within which a risky driving behavior may occur based on values of $a_x$, $a_y$ and $a_z$.

The data extraction module 1713 may be configured to extract acceleration data within the data interval.

The coordinate transformation module 1714 may be configured to obtain target data by performing a coordinate transformation on the extracted acceleration data, wherein a plane composed of an x-axis and a y-axis corresponding to the target data may be a horizontal plane and a z-axis direction may be the same as the gravity direction.

The feature extraction module 1715 may be configured to perform a feature extraction on the target data based on predetermined feature parameters, wherein the predetermined feature parameters include at least one of a time domain feature, a frequency domain feature, a velocity feature.

The second determination module 1716 may be configured to determine whether a risky driving behavior may occur based on the extracted features.

In some embodiments, according to the above device, the driving behaviors of the driver can be detected timely and effectively by the mobile terminal and whether the driver has a risky driving behavior can be determined. For the online taxi-hailing platform, the personal safeties of drivers and passengers can be ensured and service request allocation strategies can be optimized through the timely and effective detection of the risky driving behaviors of the drivers, and then the online taxi-hailing platform can be further optimized.

In some embodiments, the obtaining module 1711 may be configured to obtain the acceleration data collected by the acceleration sensor installed on the mobile terminal when the mobile terminal activates the driving behavior detection function.

In some embodiments, the device may further include an activation module configured to activate the driving behavior detection function if the mobile terminal activates a navigation function and/or accepts a service request from the online taxi-hailing platform.

In some embodiments, the first determination module 1712 may include a calculation unit configured to determine a total acceleration based on $a_x$, $a_y$, and $a_z$; a statistics unit configured to determine a number count of consecutive total accelerations greater than a preset threshold; and a determination unit configured to determine an acceleration data interval corresponding to the consecutive total accelerations as a data interval within which a risky driving behavior may occur in response to determining that the number count is greater than a preset number.

In some embodiments, the calculation unit may be configured to determine the total acceleration according to equation (1) or equation (2).

In some embodiments, the coordinate transformation module 1714 may be configured to perform a high-pass filtering on the extracted acceleration data to extract low-frequency acceleration data. The coordinate transformation module 1714 may designate a direction of the low-frequency acceleration data as a gravity direction. The coordinate transformation module 1714 may construct a rotation matrix based on an angle between the gravity direction and the direction of $a_z$. The coordinate transformation module 1714 may perform a coordinate transformation on the acceleration data by multiplying the extracted acceleration data by the rotation matrix.

In some embodiment, after the acceleration data are multiplied by the rotation matrix, the device may further include an adjustment module configured to adjust coordinate axis corresponding to rotated $a_x$ or rotated $a_y$ to be consistent with the current driving direction through a SVD device.

In some embodiments, the feature extraction module 1715 may be configured to determine a maximum acceleration along each coordinate axis, a minimum acceleration along each coordinate axis, an average acceleration along each coordinate axis, or an acceleration variance along each coordinate axis if the feature parameters include a time domain feature. The feature extraction module 1715 may convert the target data into frequency domain data based on a short time Fourier transform (STFT) and determine frequency domain features corresponding to the frequency domain data if the feature parameters include a frequency domain feature. The feature extraction module 1715 may perform an integral on the target data along each coordinate axis and determine a maximum velocity along each coordinate axis, a minimum velocity along each coordinate axis, a velocity final-value along each coordinate axis, or a velocity mid-value along each coordinate axis based on the integral result.

In some embodiments, the feature extraction module 1715 may be further configured to determine high-frequency energy value, a low-frequency energy value, or a low-frequency duration corresponding to the frequency domain data.

In some embodiments, the second determination module 1716 may be configured to input the extracted features into a decision tree model stored on the mobile terminal and output a decision result including whether a risky driving behavior may occur. The decision tree model may be pre-trained based on feature parameters corresponding to the risky driving behavior.

In some embodiments, the device may further include a storage module configured to store acceleration data corresponding to the risky driving behavior in response to determining that a risky driving behavior occurs.

In some embodiments, the device may further include a first transmission module configured to send the acceleration data to the server 110 according to a preset period. In some embodiments, the device may further include a second transmission module configured to send the acceleration data to the server 110 if the stored acceleration data reaches a preset amount.

The implementation principle and the technical effects of the device provided herein are the same as those described in the foregoing embodiments. For convenience, those not described in the device embodiment can be referred to the foregoing method embodiments.

The modules in the driving behavior detecting device 1700 may be connected to or communicate with each other via a wired connection or a wireless connection. The wired connection may include a metal cable, an optical cable, a hybrid cable, or the like, or any combination thereof. The wireless connection may include a Local Area Network (LAN), a Wide Area Network (WAN), a Bluetooth, a ZigBee, a Near Field Communication (NFC), or the like, or any combination thereof. Two or more of the modules may be combined into a single module, and any one of the modules may be divided into two or more units.

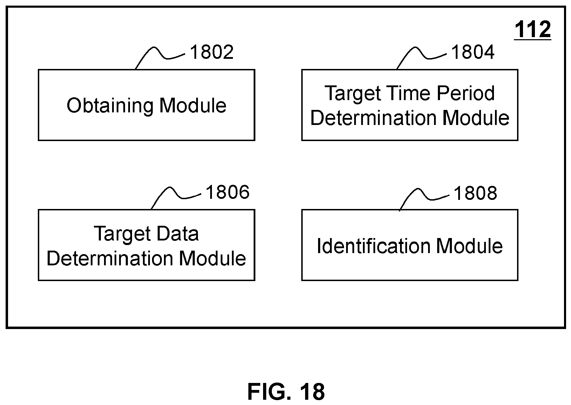

FIG. 18 is a block diagram illustrating an exemplary processing engine according to some embodiments of the present disclosure. The processing engine 112 may include an obtaining module 1802, a target time period determination module 1804, a target data determination module 1806, and an identification module 1808.

The obtaining module 1802 may be configured to obtain driving data (e.g., the first motion data described in FIG. 4, the acceleration data described in FIG. 8) from sensors associated with a vehicle driven by a driver.

The target time period determination module 1804 may be configured to determine a target time period based on the driving data. In some embodiments, as described in connection with FIG. 4 and FIG. 6, the target time period determination module 1804 may determine the target time period based on the pre-rule. The target time period determination module 1804 may determine a plurality of fluctuation variances of the driving data corresponding to a plurality of time points. The target time period determination module 1804 may further determine a time period including the plurality of time points as the target time period in response to determining that the plurality of fluctuation variances are greater than a variance threshold (i.e., the first threshold or the second threshold described in FIG. 4). In some embodiments, as described in connection with FIG. 8 and FIG. 10, the target time period determination module 1804 may identify a time period within which each of a plurality of total accelerations corresponding to a plurality of time points is greater than an acceleration threshold and determine the time period as the target time period in response to determining that a number count of the plurality of total accelerations is greater than a count threshold.

The target data determination module 1806 may be configured to obtain target data within the target time period based on the driving data. In some embodiments, as described in connection with FIG. 4 and FIG. 6, the target data determination module 1806 may determine feature data associated with the driving data during the target time period and determine the target data within the target time period by filtering out irrelevant data from the driving data based on the feature data and a machine learning model (e.g., a shaking binary model). In some embodiments, as described in FIG. 8 and FIG. 12, the target data determination module 1806 may obtain acceleration data within the target time period from the driving data, perform a coordinate transformation on the acceleration data, and obtain the target data within the target time period based on transformed acceleration data.

The identification module 1808 may be configured to identify a presence of a risky driving behavior of the driver based on the target data. In some embodiments, the processing engine 112 may extract one or more feature parameters associated with the target data and identify the presence of the risky driving behavior based on the one or more feature parameters.

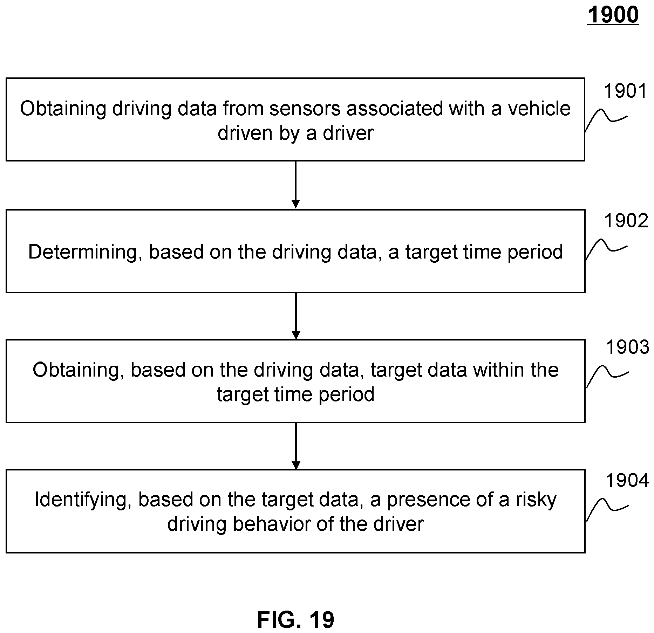

More descriptions of the modules may be found elsewhere in the present disclosure (e.g., FIG. 19 and the descriptions thereof).

The modules in the processing engine 112 may be connected to or communicate with each other via a wired connection or a wireless connection. The wired connection may include a metal cable, an optical cable, a hybrid cable, or the like, or any combination thereof. The wireless connection may include a Local Area Network (LAN), a Wide Area Network (WAN), a Bluetooth, a ZigBee, a Near Field Communication (NFC), or the like, or any combination thereof. Two or more of the modules may be combined into a single module, and any one of the modules may be divided into two or more units. For example, the processing engine 112 may include a storage module (not shown) configured to store information and/or data (e.g., the driving data, the target time period, the target data) associated with the driver. As another example, the target time period determination module 1804 and the target data determination module 1806 may be combined as a single module which may both determine the target time period and the target data.

FIG. 19 is a flowchart illustrating an exemplary process for identifying a risky driving behavior according to some embodiments of the present disclosure. The process 1900 may be executed by the on-demand service system 100. For example, the process 1900 may be implemented as a set of instructions (e.g., an application) stored in the storage ROM 230 or RAM 240. The processor 220 and/or modules in the FIG. 18 may execute the set of instructions, and when executing the instructions, the processor 220 and/or the modules may be configured to perform the process 1900. The operations of the illustrated process presented below are intended to be illustrative. In some embodiments, the process 1900 may be accomplished with one or more additional operations not described and/or without one or more of the operations discussed. Additionally, the order in which the operations of the process as illustrated in FIG. 19 and described below is not intended to be limiting. In some embodiments, the process 1900 may be executed by the server 110 or a mobile terminal (e.g., the provider terminal 140), as described above, it can be considered that the process 1900 is executed by the processing engine 112.

In 1901, the processing engine 112 (e.g., the obtaining module 1802) (e.g., the interface circuits of the processor 220) may obtain driving data (e.g., the first motion data described in FIG. 4, the acceleration data described in FIG. 8) from sensors associated with a vehicle driven by a driver. As used herein, the driving data may include at least one of acceleration information, velocity information, location information, time information, or posture information. As described elsewhere in the present disclosure, the sensors may include sensors of a terminal device (e.g., the provider terminal 140) associated with the vehicle, accordingly, the position information may indicate a posture of the terminal device which is moving with the vehicle.

In some embodiments, the sensors may include at least one of a gyroscope, an acceleration sensor, a global position system (GPS) sensor, or a gravity sensor. In some embodiments, the processing engine 112 may obtain the driving data according to a predetermined frequency (e.g., per 0.01 seconds, per 0.02 seconds, per 0.05 seconds, per second). More descriptions of the driving data may be found elsewhere in the present disclosure (e.g., FIGs. 4, 6, 8, and 10 and the descriptions thereof).

In 1902, the processing engine 112 (e.g., the target time period determination module 1804) (e.g., the processing circuits of the processor 220) may determine a target time period based on the driving data.

In some embodiments, as described in connection with FIG. 4 and FIG. 6, the processing engine 112 may determine the target time period based on the pre-rule. The processing engine 112 may determine a plurality of fluctuation variances of the driving data corresponding to a plurality of time points. The processing engine 112 may further determine a time period including the plurality of time points as the target time period in response to determining that the plurality of fluctuation variances are greater than a variance threshold (i.e., the first threshold or the second threshold described in FIG. 4). More descriptions of the pre-rule may be found elsewhere in the present disclosure (e.g., FIG. 4, FIG. 6, and the descriptions thereof).

In some embodiments, as described in connection with FIG. 8 and FIG. 10, the processing engine 112 may identify a time period within which each of a plurality of total accelerations corresponding to a plurality of time points is greater than an acceleration threshold and determine the time period as the target time period in response to determining that a number count of the plurality of total accelerations is greater than a count threshold. More descriptions of the total acceleration may be found elsewhere in the present disclosure (e.g., FIG. 8, FIG. 10, and the descriptions thereof).

In 1903, the processing engine 112 (e.g., the target data determination module 1806) (e.g., the processing circuits of the processor 220) may obtain target data within the target time period based on the driving data.

In some embodiments, as described in connection with FIG. 4 and FIG. 6, the processing engine 112 may determine feature data associated with the driving data during the target time period and determine the target data within the target time period by filtering out irrelevant data from the driving data based on the feature data and a machine learning model (e.g., a shaking binary model). The feature data may include a maximum acceleration, a minimum acceleration, an average acceleration, a maximum acceleration transformation angle, a minimum acceleration transformation angle, an average acceleration transformation angle, a maximum acceleration along each direction of a three-dimensional coordinate system, a minimum acceleration along each direction of the three-dimensional coordinate system, an average acceleration along each direction of the three-dimensional coordinate system, or the like, or any combination thereof. More descriptions of the feature data and the machine learning model may be found elsewhere in the present disclosure (e.g., FIGs. 4-7 and the descriptions thereof).

In some embodiments, as described in FIG. 8 and FIG. 12, the processing engine 112 may obtain acceleration data within the target time period from the driving data, perform a coordinate transformation on the acceleration data, and obtain the target data within the target time period based on transformed acceleration data. For example, the processing engine 112 may extract low-frequency acceleration data by performing a high-pass filtering on the acceleration data within the target time period. The processing engine 112 may designate a direction of the low-frequency acceleration data as a gravity direction. The processing engine 112 may determine a rotation matrix based on an angle between the gravity direction and a direction of a z-axis acceleration. The processing engine 112 may further perform the coordinate transformation on the acceleration data based on the rotation matrix. More descriptions of the coordinate transformation may be found elsewhere in the present disclosure (e.g., FIG. 12 and the descriptions thereof). In some embodiments, the processing engine 112 may further adjust a direction of an x-axis acceleration or a y-axis acceleration after the coordinate transformation to a driving direction of the vehicle associated with the driver based on singular value decomposition (SVD).

In 1904, the processing engine 112 (e.g., the identification module 1808) (e.g., the processing circuits of the processor 220) may identify a presence of a risky driving behavior of the driver based on the target data.

In some embodiments, as described in connection with FIG. 6, the processing engine 112 may identify the presence of the risky driving behavior of the driver based on a machine learning model.

In some embodiments, as described in connection with FIG. 16, the processing engine 112 may extract one or more feature parameters associated with the target data and identify the presence of the risky driving behavior based on the one or more feature parameters. In some embodiments, the one or more feature parameters may include a time domain feature, a frequency domain feature, a velocity feature, or the like, or a combination thereof.

In some embodiments, the processing engine 112 may extract the time domain feature including a maximum acceleration along each coordinate axis, a minimum acceleration along each coordinate axis, an average acceleration along each coordinate axis, an acceleration variance along each coordinate axis, or the like, or a combination thereof.

In some embodiments, the processing engine 112 may determine frequency domain data corresponding to the target data by performing a Fourier transform on the target data and extract the frequency domain feature. The frequency domain feature may include a high-frequency energy value, a low-frequency energy value, a low-frequency duration, or the like, or a combination thereof.

In some embodiments, the processing engine 112 may perform an integral on the target data and extract the velocity feature including a maximum velocity along each coordinate axis, a minimum velocity along each coordinate axis, a velocity final-value along each coordinate axis, a velocity mid-value along each coordinate axis, or the like, or a combination thereof.

In some embodiments, after extracting the one or more feature parameters, the processing engine 112 may identify the presence of the risky driving behavior based on the one or more feature parameters by using a trained identification model. More descriptions of the identification of the risky driving behavior may be found elsewhere in the present disclosure (e.g., FIGs. 5, 8, 13-17, and the descriptions thereof).

In some embodiments, as described elsewhere in the present disclosure, the processing engine 112 may further upload relevant data associated with the risky driving behavior of the driver to the server 110.

It should be noted that the above description is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure. For example, one or more other optional operations (e.g., a storing operation) may be added elsewhere in the exemplary process 1900. In the storing operation, the processing engine 112 may store the driving data, the target time period, and/or the target data in a storage device (e.g., the storage 150) disclosed elsewhere in the present disclosure.

Some embodiments of the present disclosure may take the form of a computer program product embodied in one or more computer-readable media having computer readable program code embodied thereon. For example, the computer-readable storage medium may include but not limited to disk storage, a CD-ROM, and optical memory.

The present disclosure may also provide a computer storage medium including instructions. When executed by at least one processor, the instructions may direct the at least one processor to perform a process (e.g., process 600, process 700, process 800, process 1000, process 1200, process 1600, process 1900,) described elsewhere in the present disclosure.

In addition, in the description of the embodiments of the present disclosure, the terms "install," "join," or "connect" should be understood broadly unless clearly defined or restricted. For example, it may be a fixed connection, a detachable connection, or an integral connection; it may be a mechanical connection or an electrical connection; it may be directly connected or indirectly connected through an intermediate medium, which can be the internal connection between two components. For persons skilled in the art, the specific meanings of the terms in the present disclosure may be understood under specific situations.

In the description of the present disclosure, it should be noted that the terms "first," "second," and "third" are used for descriptive purposes only and should not to be construed as indicating or implying relative importance.

It should be noted that the above description is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure, and are within the spirit and scope of the exemplary embodiments of this disclosure.

Moreover, certain terminology has been used to describe embodiments of the present disclosure. For example, the terms "one embodiment," "some embodiments," and/or "some embodiments" mean that a particular feature, structure or characteristic described in connection with some embodiments is included in at least one embodiment of the present disclosure. Therefore, it is emphasized and should be appreciated that two or more references to "some embodiments," "one embodiment," or "an alternative embodiment" in various portions of this specification are not necessarily all referring to the same embodiment. Furthermore, the particular features, structures or characteristics may be combined as suitable in one or more embodiments of the present disclosure.

Further, it will be appreciated by one skilled in the art, aspects of the present disclosure may be illustrated and described herein in any of a number of patentable classes or context including any new and useful process, machine, manufacture, or composition of matter, or any new and useful improvement thereof. Accordingly, aspects of the present disclosure may be implemented entirely hardware, entirely software (including firmware, resident software, micro-code, etc.) or combining software and hardware implementation that may all generally be referred to herein as a "block," "module," "engine," "unit," "component," or "system." Furthermore, aspects of the present disclosure may take the form of a computer program product embodied in one or more computer readable media having computer readable program code embodied thereon.

A computer readable signal medium may include a propagated data signal with computer readable program code embodied therein, for example, in baseband or as part of a carrier wave. Such a propagated signal may take any of a variety of forms, including electro-magnetic, optical, or the like, or any suitable combination thereof. A computer readable signal medium may be any computer readable medium that is not a computer readable storage medium and that may communicate, propagate, or transport a program for use by or in connection with an instruction execution system, apparatus, or device. Program code embodied on a computer readable signal medium may be transmitted using any appropriate medium, including wireless, wireline, optical fiber cable, RF, or the like, or any suitable combination of the foregoing.

Computer program code for carrying out operations for aspects of the present disclosure may be written in any combination of one or more programming languages, including an object oriented programming language such as Java, Scala, Smalltalk, Eiffel, JADE, Emerald, C++, C#, VB. NET, Python or the like, conventional procedural programming languages, such as the "C" programming language, Visual Basic, Fortran 1703, Perl, COBOL 1702, PHP, ABAP, dynamic programming languages such as Python, Ruby and Groovy, or other programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider) or in a cloud computing environment or offered as a service such as a software as a service (SaaS).

Furthermore, the recited order of processing elements or sequences, or the use of numbers, letters, or other designations, therefore, is not intended to limit the claimed processes and methods to any order except as may be specified in the claims. Although the above disclosure discusses through various examples what is currently considered to be a variety of useful embodiments of the disclosure, it is to be understood that such detail is solely for that purpose, and that the appended claims are not limited to the disclosed embodiments, but, on the contrary, are intended to cover modifications and equivalent arrangements that are within the scope of the disclosed embodiments. For example, although the implementation of various components described above may be embodied in a hardware device, it may also be implemented as a software-only solution-e.g., an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claimed subject matter may lie in less than all features of a single foregoing disclosed embodiment.

## Claims

1.  A system (100), comprising:

    an obtaining module (1802) configured to obtain driving data from sensors associated with a vehicle driven by a driver;
    a target time period determination module (1804) configured to determine, based on the driving data, a plurality of fluctuation variances of the driving data corresponding to a plurality of time points and a target time period, wherein the plurality of fluctuation variances of the driving data corresponding to the plurality of time points within the target time period are greater than a fluctuation variance threshold;
    a target data determination module (1806) configured to obtain, based on the driving data, target data within the target time period;
    an identification module (1808) configured to identify, based on the target data, a presence of a risky driving behavior of the driver.

2.  The system (100) of claim 1, wherein the driving data comprises at least one of acceleration information, velocity information, location information, time information, or posture information.

3.  The system (100) of claim 1 or claim 2, wherein to determine, based on the driving data, the target time period, the target time period determination module (1804) is configured to:

    determine the plurality of fluctuation variances of the driving data corresponding to the plurality of time points; and
    determine a time period comprising the plurality of time points as the target time period in response to determining that the plurality of fluctuation variances are greater than the fluctuation variance threshold.

4.  The system (100) of any of claims 1-3, wherein to obtain, based on the driving data, the target data within the target time period, the target data determination module (1806) is configured to:

> determine feature data associated with the driving data during the target time period; and
> determine the target data within the target time period by filtering out, based on the feature data and a machine learning model, irrelevant data from the driving data.

5. The system (100) of any of claims 1-4, wherein to determine, based on the driving data, the target time period, the target time period determination module (1804) is configured to:

> identify a time period within which each of a plurality of total accelerations corresponding to a plurality of time points is greater than an acceleration threshold; and
> determine the time period as the target time period in response to determining that a number count of the plurality of total accelerations is greater than a count threshold.

6. The system (100) of any of claims 1-5, wherein to obtain, based on the driving data, the target data within the target time period, the target data determination module (1806) is configured to:

> obtain acceleration data within the target time period from the driving data;
> perform a coordinate transformation on the acceleration data; and
> obtain the target data within the target time period based on transformed acceleration data.

7. The system (100) of claim 6, wherein to perform the coordinate transformation on the acceleration data, the target data determination module (1806) is configured to:

> extract low-frequency acceleration data by performing a high-pass filtering on the acceleration data within the target time period;
> designate a direction of the low-frequency acceleration data as a gravity direction;
> determine a rotation matrix based on an angle between the gravity direction and a direction of a z-axis acceleration; and
> perform the coordinate transformation on the acceleration data based on the rotation matrix.

8. The system (100) of any of claims 1-7, wherein to identify, based on the target data, the presence of the risky driving behavior of the driver, the identification module (1808) is configured to:

> extract one or more feature parameters associated with the target data, the one or more feature parameters comprising at least one of a time domain feature, a frequency domain feature, or a velocity feature; and
> identify the presence of the risky driving behavior based on the one or more feature parameters.

9. The system (100) of claim 8, wherein the one or more feature parameters comprise the time domain feature, and to extract the one or more feature parameters associated with the target data, the identification module (1808) is configured to:
extract the time domain feature comprising a maximum acceleration along each coordinate axis, a minimum acceleration along each coordinate axis, an average acceleration along each coordinate axis, or an acceleration variance along each coordinate axis.

10. The system (100) of claim 8 or claim 9, wherein the one or more feature parameters comprise the frequency domain feature, and to extract the one or more feature parameters associated with the target data, the identification module (1808) is configured to:

> determine frequency domain data corresponding to the target data by performing a Fourier transform on the target data; and
> extract the frequency domain feature comprising at least one of a high-frequency energy value, a low-frequency energy value, or a low-frequency duration.

11. The system (100) of any of claims 9-10, wherein the one or more feature parameters comprise the velocity feature, and to extract the one or more feature parameters associated with the target data, the identification module (1808) is configured to:
extract the velocity feature comprising a maximum velocity along each coordinate axis, a minimum velocity along each coordinate axis, or a velocity mid-value along each coordinate axis by performing an integral on the target data.

12. The system (100) of any of claims 9-11, wherein to identify the presence of the driving behavior based on the one or more feature parameters, the identification module (1808) is configured to:
identify the presence of the risky driving behavior based on the one or more feature parameters by using a trained identification model.

13. The system (100) of any of claims 1-12, wherein the sensors associated with the vehicle comprise sensors of a terminal device associated with the vehicle.

14. A method implemented on a computing device including at least one processor (220), at least one storage medium, and a communication platform (310) connected to a network (120), the method comprising:

obtaining driving data from sensors associated with a vehicle driven by a driver;
determining, based on the driving data, a plurality of fluctuation variances of the driving data corresponding to a plurality of time points and a target time period, wherein the plurality of fluctuation variances of the driving data corresponding to the plurality of time points within the target time period are greater than a fluctuation variance threshold;
obtaining, based on the driving data, target data within the target time period; and
identifying, based on the target data, a presence of a risky driving behavior of the driver.

15. A non-transitory computer readable medium, comprising executable instructions that, when executed by at least one processor (220), direct the at least one processor (220) to perform a method, the method comprising:

obtaining driving data from sensors associated with a vehicle driven by a driver;
determining, based on the driving data, a plurality of fluctuation variances of the driving data corresponding to a plurality of time points and a target time period, wherein the plurality of fluctuation variances of the driving data corresponding to the plurality of time points within the target time period are greater than a fluctuation variance threshold;
obtaining, based on the driving data, target data within the target time period; and
identifying, based on the target data, a presence of a risky driving behavior of the driver.

**Patentansprüche**

1. System (100), umfassend:

ein Gewinnungsmodul (1802), das so ausgelegt ist, dass es Fahrdaten anhand von Sensoren gewinnt, die mit einem von einem Fahrer gefahrenen Fahrzeug verknüpft sind;
ein Zielzeitraum-Bestimmungsmodul (1804), das so ausgelegt ist, dass es auf Basis der Fahrdaten eine Vielzahl von Schwankungsabweichungen der Fahrdaten, die einer Vielzahl von Zeitpunkten entsprechen, und einen Zielzeitraum bestimmt, wobei die Vielzahl von Schwankungsabweichungen der Fahrdaten, die der Vielzahl von Zeitpunkten im Zielzeitraum entsprechen, größer sind als eine Schwankungsabweichungsschwelle;
ein Zieldaten-Bestimmungsmodul (1806), das so ausgelegt ist, dass es auf Basis der Fahrdaten Zieldaten im Zielzeitraum gewinnt;
ein Identifikationsmodul (1808), das so ausgelegt ist, dass es auf Basis der Zieldaten ein Vorliegen eines riskanten Fahrverhaltens des Fahrers bestimmt.

2. System (100) nach Anspruch 1, wobei die Fahrdaten mindestens eines aus Beschleunigungsinformationen, Geschwindigkeitsinformationen, Standortinformationen, Zeitinformationen oder Lageinformationen umfassen.

3. System (100) nach Anspruch 1 oder Anspruch 2, wobei, um auf Basis der Fahrdaten den Zielzeitraum zu bestimmen, das Zielzeitraum-Bestimmungsmodul (1804) so ausgelegt ist, dass es:

die Vielzahl von Schwankungsabweichungen der Fahrdaten, die der Vielzahl von Zeitpunkten entsprechen, bestimmt; und
in Reaktion auf das Bestimmen, dass die Vielzahl von Schwankungsabweichungen größer sind als die Schwankungsabweichungsschwelle, einen Zeitraum, der die Vielzahl von Zeitpunkten umfasst, als den Zielzeitraum bestimmt.

4. System (100) nach einem der Ansprüche 1-3, wobei, um auf Basis der Fahrdaten die Zieldaten im Zielzeitraum zu gewinnen, das Zieldaten-Bestimmungsmodul (1806) so ausgelegt ist, dass es:

Merkmalsdaten bestimmt, die mit den Fahrdaten während des Zielzeitraums verknüpft sind; und
die Zieldaten im Zielzeitraum bestimmt, indem es auf Basis der Merkmalsdaten und eines maschinellen Lernmodells irrelevante Daten aus den Fahrdaten ausfiltert.

5. System (100) nach einem der Ansprüche 1-4, wobei, um auf Basis der Fahrdaten den Zielzeitraum zu bestimmen, das Zielzeitraum-Bestimmungsmodul (1804) so ausgelegt ist, dass es:

einen Zeitraum identifiziert, in dem jede aus einer Vielzahl von Gesamtbeschleunigungen, die einer Vielzahl von Zeitpunkten entsprechen, größer ist als eine Beschleunigungsschwelle; und
in Reaktion auf das Bestimmen, dass eine zahlenmäßige Anzahl der Vielzahl von Gesamtbeschleunigungen größer ist als eine Anzahlschwelle, den Zeitraum als den Zielzeitraum bestimmt.

6. System (100) nach einem der Ansprüche 1-5, wobei, um auf Basis der Fahrdaten die Zieldaten im Zielzeitraum zu gewinnen, das Zieldaten-Bestimmungsmodul (1806) so ausgelegt ist, dass es:

anhand der Fahrdaten Beschleunigungsdaten im Zielzeitraum gewinnt;
eine Koordinatentransformation an den Beschleunigungsdaten durchführt; und
auf Basis von transformierten Beschleunigungsdaten die Zieldaten im Zielzeitraum gewinnt.

7. System (100) nach Anspruch 6, wobei, um die Koordinatentransformation an den Beschleunigungsdaten durchzuführen, das Zieldaten-Bestimmungsmodul (1806) so ausgelegt ist, dass es:

niederfrequente Beschleunigungsdaten extrahiert, indem es eine Hochpassfilterung an den Beschleunigungsdaten im Zielzeitraum durchführt;
eine Richtung der niederfrequenten Beschleunigungsdaten als Schwerkraftrichtung benennt;
auf Basis eines Winkels zwischen der Schwerkraftrichtung und einer Richtung einer z-Achsen-Beschleunigung eine Rotationsmatrix bestimmt; und
auf Basis der Rotationsmatrix die Koordinatentransformation an den Beschleunigungsdaten durchführt.

8. System (100) nach einem der Ansprüche 1-7, wobei, um auf Basis der Zieldaten das Vorliegen des riskanten Fahrverhaltens des Fahrers zu identifizieren, das Identifikationsmodul (1808) so ausgelegt ist, dass es:

einen oder mehrere Merkmalsparameter, die mit den Zieldaten verknüpft sind, extrahiert, wobei der eine oder die mehreren Merkmalsparameter mindestens eines aus einem Zeitbereichsmerkmal, einem Frequenzbereichsmerkmal, oder einem Geschwindigkeitsmerkmal umfassen; und
auf Basis des einen oder der mehreren Merkmalsparameter das Vorliegen des riskanten Fahrverhaltens identifiziert.

9. System (100) nach Anspruch 8, wobei der eine oder die mehreren Merkmalsparameter das Zeitbereichsmerkmal umfassen, und, um den einen oder die mehreren mit den Zieldaten verknüpften Merkmalsparameter zu extrahieren, das Identifikationsmodul (1808) so ausgelegt ist, dass es:
das Zeitbereichsmerkmal, das eine maximale Beschleunigung entlang jeder Koordinatenachse, eine minimale Beschleunigung entlang jeder Koordinatenachse, eine durchschnittliche Beschleunigung entlang jeder Koordinatenachse, oder eine Beschleunigungsabweichung entlang jeder Koordinatenachse umfasst, extrahiert.

10. System (100) nach Anspruch 8 oder Anspruch 9, wobei der eine oder die mehreren Merkmalsparameter das Frequenzbereichsmerkmal umfassen, und, um den einen oder die mehreren mit den Zieldaten verknüpften Merkmalsparameter zu extrahieren, das Identifikationsmodul (1808) so ausgelegt ist, dass es:

Frequenzbereichsdaten, die den Zieldaten entsprechen, bestimmt, indem es eine Fourier-Transformation an den Zieldaten durchführt; und
das Frequenzbereichsmerkmal, das mindestens eines aus einem hochfrequenten Energiewert, einem niederfrequenten Energiewert, oder einer niederfrequenten Dauer umfasst, extrahiert.

**11.** System (100) nach einem der Ansprüche 9-10, wobei der eine oder die mehreren Merkmalsparameter das Geschwindigkeitsmerkmal umfassen, und, um den einen oder die mehreren mit den Zieldaten verknüpften Merkmalsparameter zu extrahieren, das Identifikationsmodul (1808) so ausgelegt ist, dass es:
das Geschwindigkeitsmerkmal, das eine maximale Geschwindigkeit entlang jeder Koordinatenachse, eine minimale Geschwindigkeit entlang jeder Koordinatenachse, oder einen Geschwindigkeits-Mittelwert entlang jeder Koordinatenachse umfasst, extrahiert, indem es ein Integral an den Zieldaten durchführt.

**12.** System (100) nach einem der Ansprüche 9-11, wobei, um auf Basis des einen oder der mehreren Merkmalsparameter das Vorliegen des Fahrverhaltens zu identifizieren, das Identifikationsmodul (1808) so ausgelegt ist, dass es:
auf Basis des einen oder der mehreren Merkmalsparameter das Vorliegen des riskanten Fahrverhaltens identifiziert, indem es ein trainiertes Identifikationsmodell verwendet.

**13.** System (100) nach einem der Ansprüche 1-12, wobei die mit dem Fahrzeug verknüpften Sensoren Sensoren eines Endgeräts umfassen, das mit dem Fahrzeug verknüpft ist.

**14.** Verfahren, das auf einer Rechenvorrichtung implementiert wird, die mindestens einen Prozessor (220), mindestens ein Speichermedium, und eine mit einem Netzwerk (120) verbundene Kommunikationsplattform (310) einschließt, wobei das Verfahren umfasst:

Gewinnen von Fahrdaten anhand von Sensoren, die mit einem von einem Fahrer gefahrenen Fahrzeug verknüpft sind;
Bestimmen, auf Basis der Fahrdaten, einer Vielzahl von Schwankungsabweichungen der Fahrdaten, die einer Vielzahl von Zeitpunkten entsprechen, und eines Zielzeitraums, wobei die Vielzahl von Schwankungsabweichungen der Fahrdaten, die der Vielzahl von Zeitpunkten im Zielzeitraum entsprechen, größer sind als eine Schwankungsabweichungsschwelle;
Gewinnen, auf Basis der Fahrdaten, von Zieldaten im Zielzeitraum; und
Identifizieren, auf Basis der Zieldaten, eines Vorliegens eines riskanten Fahrverhaltens des Fahrers.

**15.** Nichtflüchtiges computerlesbares Medium, das ausführbare Anweisungen umfasst, die, wenn sie von mindestens einem Prozessor (220) ausgeführt werden, den mindestens einen Prozessor (220) dazu anleiten, ein Verfahren durchzuführen, wobei das Verfahren umfasst:

Gewinnen von Fahrdaten anhand von Sensoren, die mit einem von einem Fahrer gefahrenen Fahrzeug verknüpft sind;
Bestimmen, auf Basis der Fahrdaten, einer Vielzahl von Schwankungsabweichungen der Fahrdaten, die einer Vielzahl von Zeitpunkten entsprechen, und eines Zielzeitraums, wobei die Vielzahl von Schwankungsabweichungen der Fahrdaten, die der Vielzahl von Zeitpunkten im Zielzeitraum entsprechen, größer sind als eine Schwankungsabweichungsschwelle;
Gewinnen, auf Basis der Fahrdaten, von Zieldaten im Zielzeitraum; und
Identifizieren, auf Basis der Zieldaten, eines Vorliegens eines riskanten Fahrverhaltens des Fahrers.

## Revendications

**1.** Système (100) comprenant :

un module d'obtention (1802) configuré pour obtenir des données de conduite en provenance de capteurs associés à un véhicule conduit par un conducteur ;
un module de détermination de période de temps cible (1804) configuré pour déterminer, sur la base des données de conduite, une pluralité de variances de fluctuation des données de conduite correspondant à la pluralité de points temporels et à une période de temps cible, dans lequel la pluralité de variances de fluctuation des données de conduite correspondant à la pluralité de points temporels pendant la période de temps cible sont supérieures à un seuil de variance de fluctuation ;
un module de détermination de données cibles (1806) configuré pour obtenir, sur la base des données de conduite, des données cibles pendant la période de temps cible ;
un module d'identification (1808) configuré pour identifier, sur la base des données cibles, une présence d'un comportement de conduite risqué du conducteur.

**2.** Système (100) selon la revendication 1, dans lequel les données de conduite comprennent au moins l'une des informations d'accélération, des informations de vitesse, des informations de localisation, des informations de temps ou des informations de posture.

**3.** Système (100) selon la revendication 1 ou la revendication 2, dans lequel, pour déterminer, sur la base des données de conduite, la période de temps cible, le module de détermination de période de temps cible (1804) est configuré :

pour déterminer la pluralité de variances de fluctuation des données de conduite correspondant à la pluralité de points temporels ; et
pour déterminer une période de temps cible comprenant la pluralité de points temporels comme étant la période de temps cible à la suite de la détermination que la pluralité de variances de fluctuation sont supérieures au seuil de variance de fluctuation.

**4.** Système (100) selon l'une quelconque des revendications 1-3, dans lequel, pour obtenir, sur la base des données de conduite, les données cibles pendant la période de temps cible, le module de détermination de données cibles (1806) est configuré :

pour déterminer des données de caractéristique associées aux données de conduite pendant la période de temps cible ; et
pour déterminer les données cibles pendant la période de temps cible en filtrant, sur la base des données de caractéristique et d'un modèle d'apprentissage machine, des données non pertinentes à partir des données de conduite.

**5.** Système (100) selon l'une quelconque des revendications 1-4, dans lequel, pour déterminer, sur la base des données de conduite, la période de temps cible, le module de détermination de période de temps cible (1804) est configuré :

pour identifier une période de temps pendant laquelle chaque accélération de la pluralité d'accélérations totales correspondant à une pluralité de points temporels est supérieure à un seuil d'accélération ; et
pour déterminer la période de temps comme étant la période de temps cible à la suite de la détermination qu'un compte de nombres de la pluralité d'accélérations totales est supérieur à un seuil de compte.

**6.** Système (100) selon l'une quelconque des revendications 1-5, dans lequel, pour obtenir, sur la base des données de conduite, les données cibles pendant la période de temps cible, le module de détermination de données cibles (1806) est configuré :

pour obtenir des données d'accélération pendant la période de temps cible à partir des données de conduite ;
pour effectuer une transformation de coordonnées sur les données d'accélération ; et
pour obtenir les données cibles pendant la période de temps cible sur la base des données d'accélération transformées.

**7.** Système (100) selon la revendication 6, dans lequel, pour effectuer la transformation de coordonnées sur les données d'accélération, le module de détermination de données cibles (1806) est configuré :

pour extraire des données d'accélération basse fréquence en effectuant un filtrage passe-haut sur les données d'accélération pendant la période de temps cible ;
pour désigner une direction des données d'accélération basse fréquence en tant que direction de gravité ;
pour déterminer une matrice de rotation sur la base d'un angle entre la direction de gravité et une direction d'une accélération d'axe z ; et
pour effectuer la transformation de coordonnées sur les données d'accélération sur la base de la matrice de rotation.

**8.** Système (100) selon l'une quelconque des revendications 1-7, dans lequel, pour identifier, sur la base des données cibles, la présence du comportement de conduite risqué du conducteur, le module d'identification (1808) est configuré :

pour extraire un ou plusieurs paramètres de caractéristique associés aux données cibles, les un ou plusieurs paramètres de caractéristique comprenant au moins l'une d'une caractéristique de domaine temporel, d'une caractéristique de domaine fréquentiel ou d'une caractéristique de vitesse ;

pour identifier la présence du comportement de conduite risqué sur la base des un ou plusieurs paramètres de caractéristique.

**9.** Système (100) selon la revendication 8, dans lequel les un ou plusieurs paramètres de caractéristique comprennent la caractéristique de domaine temporel et pour extraire les un ou plusieurs paramètres de caractéristique associés aux données cibles, le module d'identification (1808) est configuré :
pour extraire la caractéristique de domaine temporel comprenant une accélération maximale le long de chaque axe de coordonnées, une accélération minimale le long de chaque axe de coordonnées, une accélération moyenne le long de chaque axe de coordonnées ou une variance d'accélération le long de chaque axe de coordonnées.

**10.** Système (100) selon la revendication 8 ou la revendication 9, dans lequel les un ou plusieurs paramètres de caractéristique comprennent la caractéristique de domaine fréquentiel et pour extraire les un ou plusieurs paramètres de caractéristique associés aux données cibles, le module d'identification (1808) est configuré :

pour déterminer des données de domaine fréquentiel correspondant aux données cibles en effectuant une transformée de Fourier sur les données cibles ; et
pour extraire la caractéristique de domaine fréquentiel comprenant au moins l'une d'une valeur d'énergie haute fréquence, d'une valeur d'énergie base fréquence ou d'une durée de basse fréquence.

**11.** Système (100) selon l'une quelconque des revendications 9-10, dans lequel les un ou plusieurs paramètres de caractéristique comprennent la caractéristique de vitesse et pour extraire les un ou plusieurs paramètres de caractéristique associés aux données cibles, le module d'identification (1808) est configuré :
pour extraie la caractéristique de vitesse comprenant une vitesse maximale le long de chaque axe de coordonnées, une vitesse minimale le long de chaque axe de coordonnées ou une valeur moyenne des vitesses le long de chaque axe de coordonnées en effectuant un intégrale sur les données cibles.

**12.** Système (100) selon l'une quelconque des revendications 9-11, dans lequel, pour identifier la présence du comportement de conduite sur la base des un ou plusieurs paramètres de caractéristique, le module d'identification (1808) est configuré :
pour identifier la présence du comportement de conduite risqué sur la base des un ou plusieurs paramètres de caractéristique en utilisant un modèle d'identification formé.

**13.** Système (100) selon l'une quelconque des revendications 1-12, dans lequel les capteurs associés au véhicule comprennent des capteurs d'un dispositif terminal associé au véhicule.

**14.** Procédé mis en œuvre sur un dispositif informatique incluant au moins un processeur (220), au moins un support de stockage et une plate-forme de communication (310) connectée à un réseau (120), le procédé comprenant :

l'obtention de données de conduite en provenance de capteurs associés à un véhicule conduit par un conducteur ;
la détermination, sur la base des données de conduite, d'une pluralité de variances de fluctuation des données de conduite correspondant à la pluralité de points temporels et à une période de temps cible, dans lequel la pluralité de variances de fluctuation des données de conduite correspondant à la pluralité de points temporels pendant la période de temps cible sont supérieures à un seuil de variance de fluctuation ;
l'obtention, sur la base des données de conduite, de données cibles pendant la période de temps cible ;
l'identification, sur la base des données cibles, d'une présence d'un comportement de conduite risqué du conducteur.

**15.** Support non transitoire lisible par ordinateur, comprenant des instructions exécutables qui, lorsqu'elles sont exécutées par au moins un processeur (220), dirigent le au moins un processeur (220) pour réaliser un procédé, le procédé comprenant :

l'obtention de données de conduite en provenance de capteurs associés à un véhicule conduit par un conducteur ;
la détermination, sur la base des données de conduite, d'une pluralité de variances de fluctuation des données de conduite correspondant à la pluralité de points temporels et à une période de temps cible, dans lequel la pluralité de variances de fluctuation des données de conduite correspondant à la pluralité de points temporels pendant la période de temps cible sont supérieures à un seuil de variance de fluctuation ;

l'obtention, sur la base des données de conduite, de données cibles pendant la période de temps cible ;
l'identification, sur la base des données cibles, d'une présence d'un comportement de conduite risqué du conducteur.

**FIG. 1**

**200**

270

DISK

260

I/O

250

COM
PORTS

210

220

Processor

230

ROM

240

RAM

**FIG. 2**

300

310

Display 320

360

330

OS 370

GPU

340 App(s) 380

CPU

Memory

350

I/O Storage 390

**FIG. 3**

**112**

402

Obtaining Module

404

Pre-rule Determination Module

406

Time Determination Module

408

Data Processing Module

410

Communication Module

412

Identification Module

FIG. 4

<u>**408**</u>

502

Obtaining Unit

504

Feature Data
Generation Unit

506

Training Unit

508

Filtering Unit

**FIG. 5**

<u>**600**</u>

```
602
┌─────────────────────────────────────────────┐
│          Determining a pre-rule             │
└─────────────────────────────────────────────┘
                      │
                      ▼
604
┌─────────────────────────────────────────────┐
│  Obtaining first motion data generated by a │
│          sensor associated with a device    │
└─────────────────────────────────────────────┘
                      │
                      ▼
606
┌─────────────────────────────────────────────┐
│   Determining a time period based on the    │
│                  pre-rule                    │
└─────────────────────────────────────────────┘
                      │
                      ▼
608
┌─────────────────────────────────────────────┐
│  Obtaining second motion data within the    │
│                time period                   │
└─────────────────────────────────────────────┘
                      │
                      ▼
610
┌─────────────────────────────────────────────┐
│  Transmitting the second motion data within │
│       the time period to a server           │
└─────────────────────────────────────────────┘
                      │
                      ▼
612
┌─────────────────────────────────────────────┐
│ Identifying a driving behavior based on the │
│              second motion data             │
└─────────────────────────────────────────────┘
```

**FIG. 6**

**700**

Obtaining a machine learning model and first motion data — 702

Obtaining feature data based on the first motion data — 704

Obtaining second motion data by filtering out unneeded information from the first motion data based on the machine learning model and the feature data — 706

**FIG. 7**

800

Collecting acceleration data through an acceleration sensor installed on a mobile terminal 802

Determining a data interval within which a risky driving behavior may occur based on values of $a_x$, $a_y$, and $a_z$ 804

Extracting acceleration data within the data interval 806

Obtaining target data by performing a coordinate transformation on the extracted acceleration data 808

Performing a feature extraction on the target data based on predetermined feature parameters 810

Determining whether a risky driving behavior may occur based on the extracted features 812

**FIG. 8**

**FIG. 9**

**1000**

Determining a total acceleration based on $a_x$, $a_y$, and $a_z$ — 1001

Determining a number count of consecutive total accelerations greater than a preset threshold — 1002

Determining an acceleration data interval corresponding to the consecutive total accelerations as a data interval within which a risky driving behavior may occur in response to determining that the number count is greater than a preset number — 1003

**FIG. 10**

**FIG. 11**

**1200**

Performing a high-pass filtering on extracted acceleration data and extracting low-frequency acceleration data  1201

Designating a direction of the low-frequency acceleration data as a gravity direction  1202

Constructing a rotation matrix based on an angle between the gravity direction and the direction of $a_z$  1203

Performing a coordinate transformation on the acceleration data by multiplying the extracted acceleration data by the rotation matrix  1204

**FIG. 12**

**FIG. 13**

**FIG. 14**

**FIG. 15-A**

**FIG. 15-B**

FIG. 15-C

<u>1600</u>

Collecting acceleration data by an acceleration sensor installed on a mobile terminal when the mobile terminal activates a driving behavior detection function — 1601

Obtaining a normalized result by normalizing the acceleration data — 1602

Obtaining at least one of the features including a time domain feature, a frequency domain feature, and a velocity feature by performing a feature extraction on the normalized result based on predetermined feature parameters — 1603

Determining whether a risky driving behavior may occur based on at least one of features by using a trained decision tree model — 1604

Uploading the risky driving behavior of the driver to a server in response to determining that a risky driving behavior may occur — 1605

FIG. 16

Obtaining Module 1711

First Determination Module 1712

Data Extraction Module 1713

Coordinate Transformation Module 1714

Feature Extraction Module 1715

Second Determination Module 1716

**FIG. 17**

**FIG. 18**

<u>**1900**</u>

Obtaining driving data from sensors associated with a vehicle driven by a driver — 1901

Determining, based on the driving data, a target time period — 1902

Obtaining, based on the driving data, target data within the target time period — 1903

Identifying, based on the target data, a presence of a risky driving behavior of the driver — 1904

**FIG. 19**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160016590 A